(19) Europäisches Patentamt
European Patent Office
Office européen des brevets

(11) EP 2 221 323 B1

(12) **EUROPEAN PATENT SPECIFICATION**

(45) Date of publication and mention of the grant of the patent:
**02.05.2012 Bulletin 2012/18**

(21) Application number: **08856963.7**

(22) Date of filing: **02.12.2008**

(51) Int Cl.:
***C08F 210/18*** *(2006.01)* ***C08F 4/6592*** *(2006.01)*

(86) International application number:
**PCT/JP2008/071905**

(87) International publication number:
**WO 2009/072503 (11.06.2009 Gazette 2009/24)**

# (54) COPOLYMER RUBBER, RUBBER COMPOSITION, AND MOLDED RUBBER

COPOLYMERKAUTSCHUK, KAUTSCHUKZUSAMMENSETZUNG UND GEFORMTER KAUTSCHUK

CAOUTCHOUC COPOLYMÈRE, COMPOSITION DE CAOUTCHOUC ET CAOUTCHOUC MOULÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.12.2007 JP 2007314886**

(43) Date of publication of application:
**25.08.2010 Bulletin 2010/34**

(73) Proprietor: **Mitsui Chemicals, Inc.**
**Tokyo 105-7117 (JP)**

(72) Inventors:
- **EBATA, Hiroki**
**Ichihara-shi**
**Chiba 299-0108 (JP)**
- **ICHINO, Kotaro**
**Sodegaura-shi**
**Chiba 299-0265 (JP)**
- **KUNIZANE, Masao**
**Ichihara-shi**
**Chiba 299-0108 (JP)**

(74) Representative: **HOFFMANN EITLE**
**Patent- und Rechtsanwälte**
**Arabellastraße 4**
**81925 München (DE)**

(56) References cited:
**EP-A1- 0 094 051**
**EP-A2- 0 751 156**
**WO-A1-98/49212**
**WO-A1-99/00434**
**JP-A- 9 071 616**
**JP-A- 58 191 705**
**JP-T- 2004 529 187**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 221 323 B1

## Description

### TECHNICAL FIELD

The present invention relates to a copolymer rubber, a rubber composition containing the copolymer rubber and a rubber molded product obtained by crosslinking the rubber composition. More particularly the invention relates to a tetrapolymer rubber according to claim 1 , a rubber composition containing the tetrapolymer rubber and a rubber molded product obtained by crosslinking the rubber composition.

### BACKGROUND ART

Ethylene/$\alpha$-olefin rubbers, such as an ethylene/propylene copolymer rubber (EPR) and an ethylene/propylene/diene copolymer rubber (EPDM), have no unsaturated bond in the main chain of their molecular structures. Therefore, they are excellent in heat aging resistance, weathering resistance and ozone resistance as compared with general-purpose conjugated diene rubbers, and they have been broadly used for automobile parts, electric wire materials, electric/electronic parts, building and civil engineering materials, or industrial material parts.
In recent years, needs of lightening and lengthening of life of various parts have been increased, and higher performance and higher qualities of high-molecular materials as their raw materials have been strongly desired. Moreover, quality control standards of the parts have been tightened up, and material design to remove kneading troubles and extrusion troubles that cause product defects has been also strongly desired.
In EPDM prepared by the use of a conventional Ziegler Natta catalyst, there is a fear that the residual metal component derived from the catalyst causes deterioration of heat resistance, occurrence of foreign matters, or inhibition of vulcanization reaction. Further, there is a problem of difficulty in control of molecular structure of the copolymer because the catalytic activity against copolymerization is low.
In order to enhance kneading processability and extrusion processability of EPDM, it is necessary to design the viscosity of the polymer moderately low. If the viscosity of the polymer is too low, sealing properties and strength of the resulting crosslinked rubber article are lowered, and there occurs a problem that the crosslinked rubber article is not practical. A method of widening a molecular weight distribution and a composition distribution to decrease the viscosity of the polymer is also known, but if the molecular weight distribution and the composition distribution are widened in accordance with this method, there occur problems that a low-molecular weight component contained in the resulting crosslinked rubber article is evaporated to cause fogging of window glass in automobiles or rooms, a low-molecular weight component contained in the crosslinked rubber article is separated to cause tackiness of the article surface, and low-temperature properties of the crosslinked rubber article are deteriorated.
On the other hand, in order to improve retention of shape in the extrusion of EPDM, viscosity of the rubber compound has only to be increased, but if the viscosity is increased, extrusion rate of EPDM is lowered, resulting in a problem of bad surface texture of the extrudate.
Under such circumstances, studies to improve sealing properties and strength of a vulcanized rubber article obtained from EPDM with maintaining kneading processability and extrusion processability of EPDM have been made in a patent document 1. However, the results are not satisfactory from the viewpoint of a balance between those processabilities and sealing properties or strength of EPDM.
Document EP0751156 discloses polymers which comprise ethylene an $\alpha$-olefin, ENB and VNB but do not fulfill requirements (4) and (5) of claim 1.

Patent document 1: WO00/59962

### DISCLOSURE OF THE INVENTION

### PROBLEM TO BE SOLVED BY THE INVENTION

It is an object of the present invention to provide a copolymer rubber which contains only small amounts of impurities and is excellent in kneading processability, extrusion processability and retention of shape and a rubber composition containing the copolymer rubber. It is another object of the invention to provide a rubber molded product which is obtained from the rubber composition, is excellent in sealing properties, surface appearance, strength properties, heat aging resistance and weathering resistance and has a low compression set.

### MEANS TO SOLVE THE PROBLEM

In order to solve the above problems, the present inventors have earnestly studied a polymerization process

using the following catalyst. As a result, they have found that the resulting copolymer rubber is excellent in kneading processability, extrusion processability and retention of shape before crosslinking, and they have accomplished the present invention.

That is to say, the copolymer rubber of the present invention comprises structural units derived from [A] ethylene, [B] an α-olefin of 3 to 20 carbon atoms, [C] a non-conjugated polyene, which is 5-ethylidene-2-norbonene (ENB) and [D] a non-conjugated polyene, which is 5-vinyl-2-norbonene (VNB), and satisfies the following requirements (1) to (5):

(1) the molar ratio ([A]/[B]) of the structural units derived from ethylene [A] to the structural units derived from the α-olefin [B] is in the range of 50/50 to 85/15,
(2) the total of molar quantities of the structural units derived from the non-conjugated polyene [C] and the structural units derived from the non-conjugated polyene [D] is in the range of 0.5 to 4.5% by mol in all the structural units,
(3) the intrinsic viscosity [η] as measured in decalin at 135°C is in the range of 1.0 to 5.0 dl/g,
(4) the molar ratio ([C]/[D]) of the structural units derived from the non-conjugated polyene [C] to the structural units derived from the non-conjugated polyene [D] is in the range of 90/10 to 99/1, and
(5) the copolymer rubber satisfies the following formula (I) :

$$\mathrm{Log}\{\eta^*(0.01)\}/\mathrm{Log}\{\eta^*(10)\} > 0.0753 \times \{\text{apparent iodine value derived from the non-conjugated polyene [D]}\} + 1.42 \quad \text{(I)}$$

wherein η*(0.01) is a viscosity (Pa·sec) at 190°C and 0.01 rad/sec, and η*(10) is a viscosity (Pa·sec) at 190°C and 10 rad/sec.

The non-conjugated polyene [C] is 5-ethylidene-2-norbornene (ENB), and the non-conjugated polyene [D] is 5-vinyl-2-norbornene (VNB).

The copolymer rubber of the invention is preferably synthesized by the use of a metallocene catalyst having a structure represented by the following formula (vi):

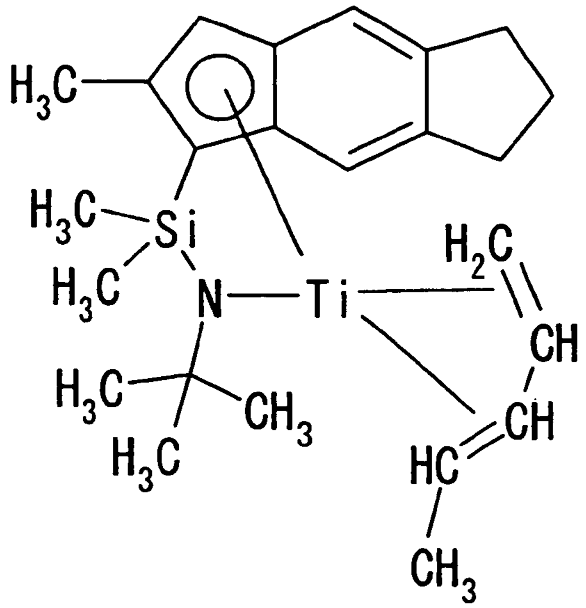

(vi)

The process for preparing a copolymer rubber of the present invention prepares the copolymer rubber of the present invention by the use of a metallocene catalyst having a structure represented by the above-mentioned formula (vi).

The process for preparing a copolymer rubber of the invention preferably has a step for obtaining a polymerization reaction solution in which the concentration of a copolymer rubber obtained by copolymerizing ethylene [A], the α-olefin [B], the non-conjugated polyene [C] and the non-conjugated polyene [D] using an aliphatic hydrocarbon as a polymerization solvent in the presence of a metallocene catalyst having a structure represented by the above-mentioned formula (vi), in the polymerization solvent is in the range of 8 to 12% by weight.

The rubber composition of the present invention contains the above-mentioned copolymer rubber.

The crosslinked rubber of the present invention is obtained by crossliking the above-mentioned rubber composition.

The sponge material for weatherstrip of the present invention comprises the above-mentioned crosslinked rubber, and examples of the sponge materials for weatherstrip include a sponge for door sponge, a sponge for opening trim, a sponge for hood seal and a sponge for trunk seal.

The highly foamed sponge material of the present invention also comprises the above-mentioned crosslinked rubber, and examples of the highly foamed sponge materials include a heat-insulating sponge and a dam rubber.

EFFECT OF THE INVENTION

The present invention provides a copolymer rubber which contains only small amounts of impurities and is excellent in kneading processability, extrusion processability and retention of shape and a rubber composition containing the copolymer rubber, and further provides a rubber molded product which is obtained from the rubber composition, is excellent in sealing properties, surface appearance, strength properties, heat aging resistance and weathering resistance and has a low compression set.

BRIEF DESCRIPTION OF THE DRAWING

Fig. 1 is a graph in which Log{η*(0.01)}/Log{η*(10)} is plotted against an apparent iodine value (g/100 g) of the component [D] with regard to each of the copolymer rubbers obtained in Examples 1 to 7 and Comparative Examples 1 to 5, and in this graph, a straight line indicates Log{η*(0.01)}/Log{η*(10)}=0.0753×{iodine value (g/100 g) of component [D]}+1.42.

## BEST MODE FOR CARRYING OUT THE INVENTION

Next, the copolymer rubber of the invention is described in detail hereinafter.

## Copolymer rubber

The copolymer rubber of the invention comprises structural units derived from [A] ethylene, [B] an α-olefin of 3 to 20 carbon atoms, [C] a non-conjugated polyene, which is 5-ethylidene-2-norbornene (ENB), , and [D] a non-conjugated polyene, which is 5-vinyl-2-norbornene, , and satisfies the following requirements (1) to (5), preferably the following requirements (1) to (6), more preferably the following requirements (1) to (7):
(1) the molar ratio ([A]/[B]) of the structural units derived from ethylene [A] to the structural units derived from the α-olefin [B] is in the range of 50/50 to 85/15,
(2) the total of molar quantities of the structural units derived from the non-conjugated polyene [C] and the structural units derived from the non-conjugated polyene [D] is in the range of 0.5 to 4.5% by mol in all the structural units,
(3) the intrinsic viscosity [η] as measured in decalin at 135°C is in the range of 1.0 to 5.0 dl/g,
(4) the molar ratio ([C]/[D]) of the structural units derived from the non-conjugated polyene [C] to the structural units derived from the non-conjugated polyene [D] is in the range of 90/10 to 99/1,
(5) the copolymer rubber satisfies the following formula (I) :

$$\mathrm{Log}\{\eta^*(0.01)\}/\mathrm{Log}\{\eta^*(10)\} > 0.0753 \times \{\text{apparent iodine value derived from the non-conjugated polyene [D]}\} + 1.42 \quad \text{(I)}$$

wherein η*(0.01) is a viscosity (Pa·sec) at 190°C and 0.01 rad/sec, and η*(10) is a viscosity (Pa·sec) at 190°C and 10 rad/sec,
(6) the copolymer rubber is synthesized by the use of a metallocene catalyst having a structure represented by the following formula (vi):

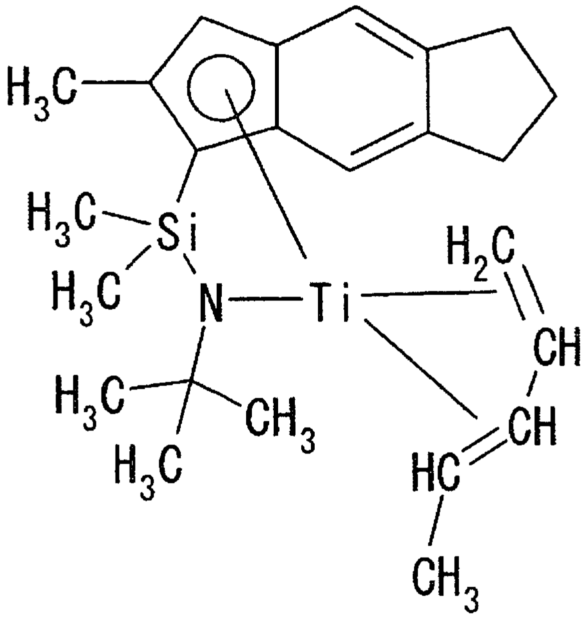

(vi),

and

(7) the Mooney viscosity [$ML_{1+4}$] as measured at 160°C is in the range of 40 to 160.

α-Olefin [B]

As the component [B] contained in the copolymer rubber of the invention, an α-olefin of 3 to 20 carbon atoms is employed.

Examples of the "α-olefins of 3 to 20 carbon atoms" include propylene, 1-butene, 1-pentene, 1-hexene, 4-methyl-1-pentene, 1-heptene, 1-octene, 1-decene, 1-dodecene, 1-tetradecene, 1-hexadecene and 1-eicosene. Of these, α-olefins of 3 to 8 carbon atoms, such as propylene, 1-butene, 1-hexene and 1-octene, are particularly preferable. These α-olefins are preferable because the raw material cost is relatively low and the resulting rubber molded product exhibits excellent mechanical properties.

Non-conjugated polyene [C]

As the component [C] contained in the copolymer rubber of the invention, 5-ethylidene-2-norbornene (ENB) is employed.

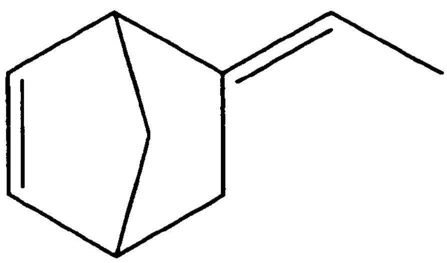

The double bond derived from ethylidene of ENB does not participate in the polymerization using the metallocene catalyst.

Non-conjugated polyene [D]

As the component [D] contained in the copolymer rubber of the invention, a non-conjugated polyene [D] having two double bonds each between adjacent carbon atoms in one molecule, said double bond being capable of polymerization by a metallocene catalyst, is employed, which s 5-vinyl-2-norbonene (VNB).

(1) Molar ratio ([A]/[B]) of structural units

The requirement (1) is that the molar ratio ([A]/[B]) of the structural units derived from ethylene [A] to the structural units derived from the α-olefin [B] is in the range of 50/50 to 85/15, preferably 55/45 to 75/25.
A molar ratio of the above range is preferable from the viewpoints of flexibility and low-temperature mechanical properties of the resulting rubber molded product.

(2) Molar quantities of structural units derived from components [C]+[D]

The requirement (2) is that the total of molar quantities of the structural units derived from the non-conjugated polyene [C] and the structural units derived from the non-conjugated polyene [D] is in the range of 0.5 to 4.5% by mol, preferably 1.5 to 4.0% by mol, more preferably 2.0 to 3.8% by mol, in all the structural units
When the "total of molar quantities" is in the above range, the resulting rubber molded product is excellent in compression set and foaming properties, so that such a range is preferable.

(3) Intrinsic viscosity [η]

The requirement (3) is that the intrinsic viscosity [η] as measured in decalin at 135°C is in the range of 1.0 to 5.0 dl/g, preferably 1.5 to 4.0 dl/g, more preferably 2.0 to 4.0 dl/g.
When the intrinsic viscosity [η] is in the above range, the rubber composition is excellent in kneading processability and the resulting rubber molded product is excellent in compression set, so that such an intrinsic viscosity is preferable.

(4) Molar ratio ([C]/[D]) of structural units

The requirement (4) is that the molar ratio ([C]/[D]) of the structural units derived from the non-conjugated polyene [C] to the structural units derived from the non-conjugated polyene [D] is in the range of 90/10 to 99/1.
A molar ratio of the above range is preferable from the viewpoints of kneading stability and foaming properties of the resulting rubber composition.

(5) Long chain branch due to component [D]

The requirement (5) is that the copolymer rubber satisfies the following formula (I), preferably the following formula (I').

$$\mathrm{Log}\{\eta^*(0.01)\}/\mathrm{Log}\{\eta^*(10)\}>0.0753\times\{\text{apparent iodine value derived from the component [D]}\}+1.42 \quad (I)$$

$$\mathrm{Log}\{\eta^*(0.01)\}/\mathrm{Log}\{\eta^*(10)\}>0.0753\times\{\text{apparent iodine value derived from the component [D]}\}+1.43 \quad (I')$$

In the formulas (I) and (I'), η*(0.01) is a viscosity (Pa·sec) at 190°C and 0.01 rad/sec, and η*(10) is a viscosity (Pa·sec) at 190°C and 10 rad/sec.
With regard to the formula (I), η*(0.01) and η*(10) are measured by a viscoelasticity measuring device, and the apparent iodine value can be determined by measuring a content (% by weight) of the structural units derived from the component [D] by NMR and specifically performing calculation from the following formula. The molecular weight of iodine is 253.81.

Apparent iodine value derived from component [D] = [content (% by weight) of structural units derived from component [D]]×Y×253.81(molecular weight of component [D] as monomer)
In the above formula, Y is a number of carbon-carbon double bonds contained in the structural units derived from the component [D].
When the copolymer rubber of the invention is in the range defined by the above formula (I), the copolymer rubber has more long chain branches in spite of a low content of the component [D]. That is to say, long chain branches required to obtain excellent retention of shape and extrusion processability can be introduced by copolymerizing a small amount of the component [D], and the resulting rubber molded product has excellent compression set because the content of the residue of the component [D] is low.
On the other hand, if the copolymer rubber is out of the range defined by the above formula (I), a large amount of the component [D] is required in order to introduce long chain branches having influence on the retention of shape and the foaming properties into the copolymer rubber. As a result, heat resistance and rubber elasticity are deteriorated, and besides, excellent sponge performance and product yield are greatly impaired by the formation of foreign matters due to gelation.

<u>(6) Catalyst</u>

The requirement (6) is that the copolymer rubber is synthesized by the use of a metallocene catalyst having a structure represented by preferably the following formula (i), more preferably the following formula (ii), (iii), (iv), (v) or (vi), particularly preferably the following formula (vi).
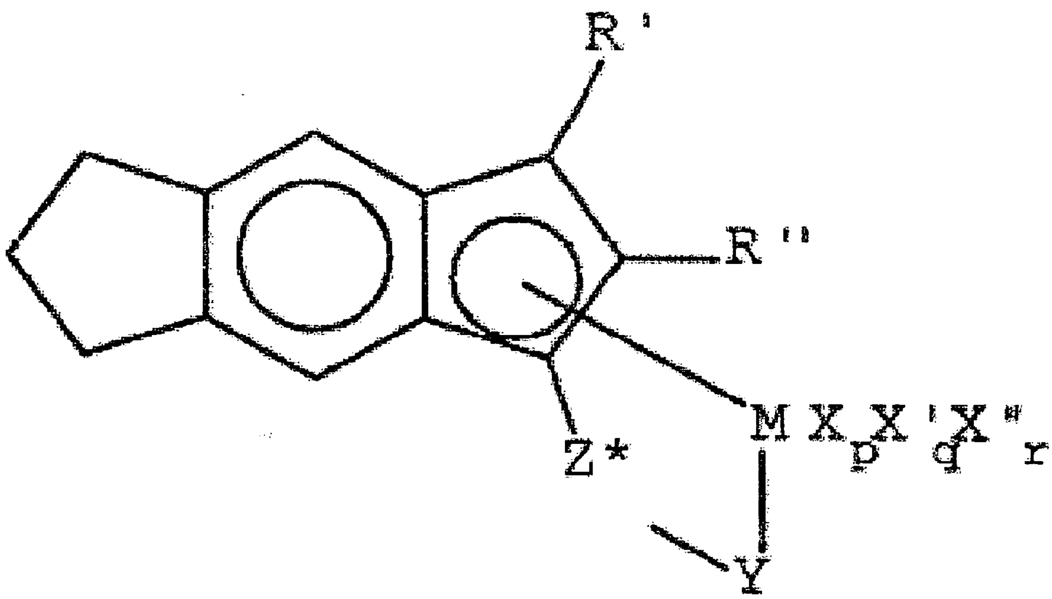

(i)

In the formula (i), R' is a hydrogen atom, a hydrocarbyl group, a di(hydrocarbylamino) group or a hydrocarbyleneamino group, and these groups have up to 20 carbon atoms.
R" is a hydrocarbyl group of 1 to 20 carbon atoms or a hydrogen atom.
M is titanium.
Y is -O-, -S-, -NR*-, -PR*-, $-NR^*_2$ or $-PR^*_2-$

Z* is -SiR*$_2$-, -CR*$_2$-, -SiR*$_2$SiR*$_2$-, -CR*$_2$CR*$_2$-, - CR*=CRY-, -CR*$_2$SiR*$_2$- or -GeR*$_2$-.

When plural R* are present, they are each independently a hydrogen atom or at least one group selected from the group consisting of a hydrocarbyl group, a hydrocarbyloxy group, a sylyl group, a halogenated alkyl group and a halogenated aryl group. This R* contains 2 to 20 atoms, and when two R* (R* is not a hydrogen atom) of Z* may arbitrarily form a ring, and R* of Z* and R* of Y may arbitrarily form a ring.

X is a monovalent anionic ligand group having up to 60 atoms other than a class of ligands that are cyclic delocalized n-bonding ligand groups.

X' is a neutral linking group having up to 20 atoms.

X" is a divalent anionic ligand group having up to 60 atoms.

p is 0, 1 or 2, q is 0 or 1, and r is 0 or 1.

However, when p is 2, q and r are each 0, M is in an oxidation state of +4 (or when Y is -NR*$_2$ or -PR*$_2$, M is an oxidation state of +3), and X is an anionic ligand selected from a halide group, a hydrocarbyl group, a hydrocarbyloxy group, a di(hydrocarbyl)amide group, a di(hydrocarbyl)phosphide group, a hydrocarbyl sulfide group, a silyl group, derivatives obtained by halogen-substitution of these groups, derivatives obtained by di(hydrocarbylamino)-substitution of these groups, derivatives obtained by hydrocarbyloxy-substitution of these groups and derivatives obtained by di (hydrocarbyl)phosphino-substitution of these groups, and has up to 30 atoms other than hydrogen atom.

When r is 1, p and q are each 0, M is in an oxidation state of +4, and X" is a dianionic ligand selected from the group consisting of a hydrocarbazyl group, an oxyhydrocarbyl group and a hydrocarbylenedioxy group and has up to 30 atoms other than hydrogen atom.

When p is 1, q and r are each 0, M is in an oxidation state of +3, and X is a stabilizing anionic ligand group selected from the group consisting of an allyl group, a 2-(N,N-dimethylamino)phenyl group, a 2-(N,N-dimethylaminomethyl)phenyl group and a 2-(N,N-dimethylamino)benzyl group.

When p and r are each 0, q is 1, M is in an oxidation state of +2, X' is a neutral conjugated diene or a neutral non-conjugated diene, which has been arbitrarily substituted by one or more hydrocarbyl groups, and this X' has up to 40 carbon atoms and forms a π-complex together with M.

In the formula (i), any one embodiment of the following embodiments (1) to (4) is preferable.

(1) p is 2, q and r are each 0, M is in an oxidation state of +4, and X is each independently methyl, benzyl or a halide.

(2) p and q are each 0, r is 1, M is in an oxidation state of +4, and X" is a 1,4-butadienyl group which forms a metallocyclopentene ring together with M.

(3) p is 1, q and r are each 0, M is in an oxidation state of +3, and X is 2-(N,N-dimethylamino)benzyl.

(4) p and r are each 0, q is 1, M is in an oxidation state of +2, and X' is 1,4-diphenyl-1,3-butadiene or 1,3-pentadiene.

In any one of the above embodiments (1) to (4), it is more preferable that R" is a hydrogen atom or a methyl group, and it is particularly preferable that R" is a hydrogen atom.

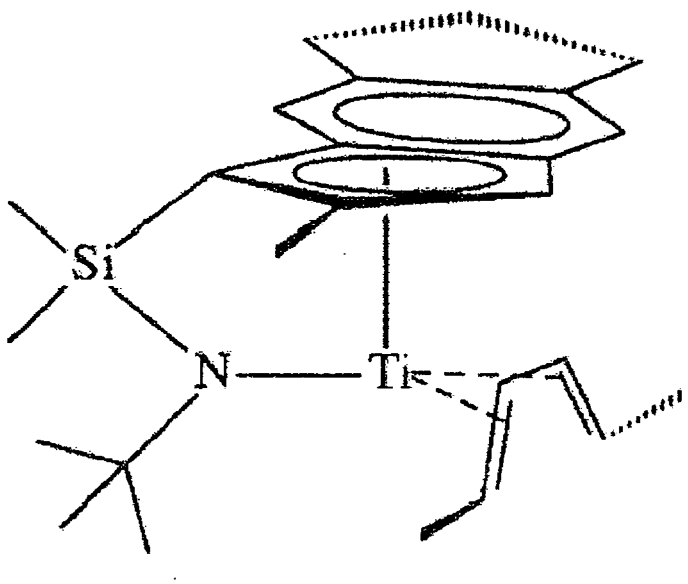

(ii)

The above formula (ii) represents (t-butylamido)dimethyl ($\eta^5$-2-methyl-s-indacene-1-yl)silane-titanium(II)2,4-hexadiene.

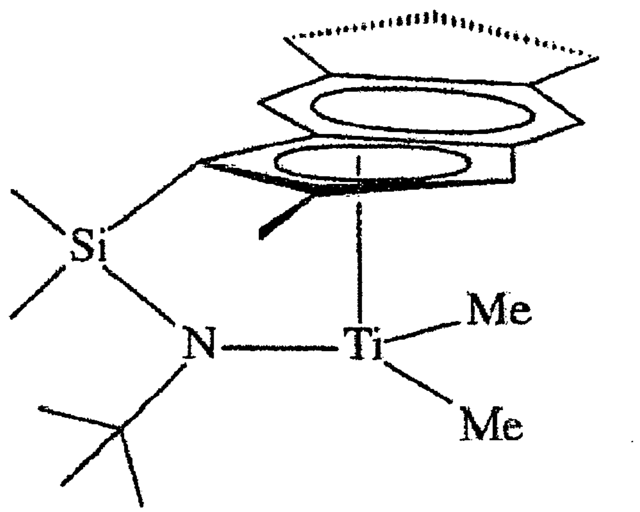

(iii)

The above formula (iii) represents (t-butylamido)-dimethyl($\eta^5$-2-methyl-s-indacene-1-yl)silane-titanium(IV) dimethyl.

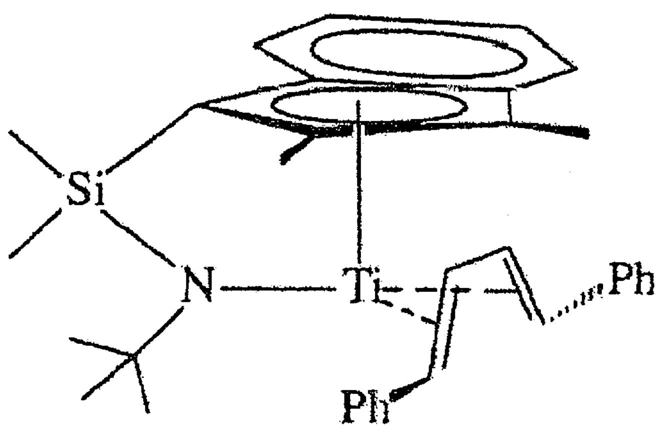

(iv)

The above formula (iv) represents (t-butylamido)-dimethyl ($\eta^5$-2,3-dimethylindenyl) silane-titanium (II) 1, 4-diphenyl-1,3-butadiene.

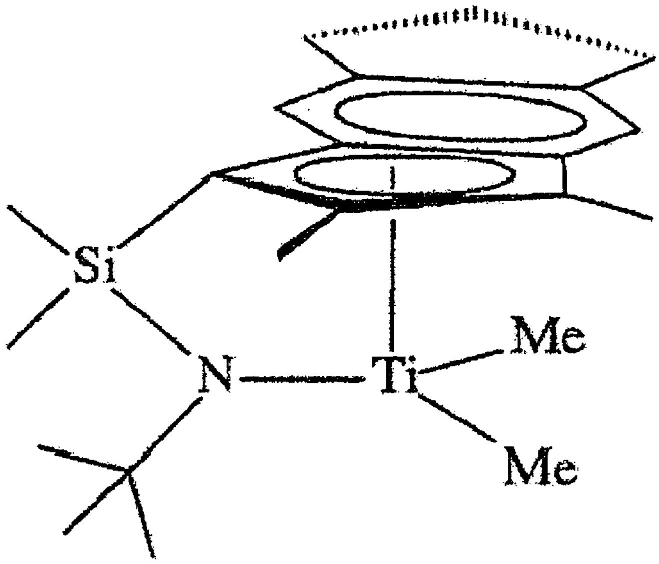

(v)

The above formula (v) represents (t-butylamido)-dimethyl($\eta^5$-2,3-dimethyl-s-indacene-1-yl)silane-titanium(IV) dimethyl.

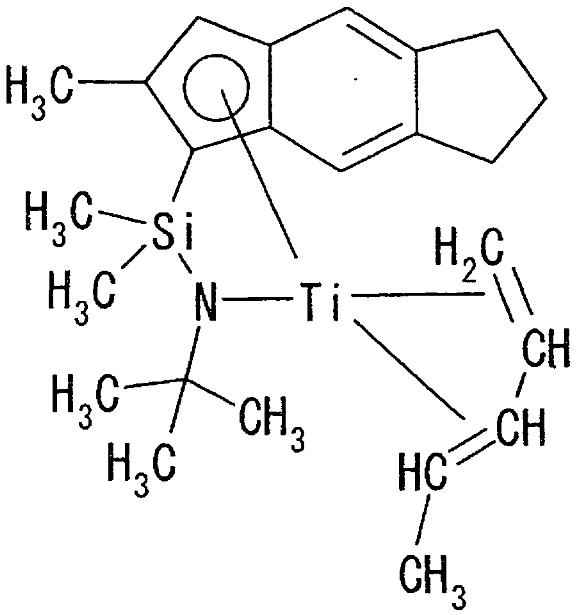

(vi)

The above formula (vi) represents (t-butylamido)-dimethyl($\eta^5$-2-methyl-s-indacene-1-yl)silane-titanium(II)1,3-pentadiene (another name: [N-(1,1-dimethylethyl)-1,1-dimethyl-1-[(1,2,3,3A,8A-η)-1,5,6,7-tetrahydro-2-methyl-S-indacene-1-yl]silaneaminate(2-)-KN][(1,2,3,4-η)-1,3-pentadiene]-titanium).

When the metallocene catalyst having a structure represented by the formula (vi) is used, the polymerization reaction for obtaining the copolymer rubber of the invention is particularly excellent in copolymerizability of the non-conjugated polyenes (component [C] and component [D]), and for example, double bonds of the VNB ends are efficiently incorporated, and long chain branches can be introduced in a high proportion. Moreover, since a copolymer rubber having a narrow molecular weight distribution and a narrow composition distribution and having an extremely uniform molecular structure can be prepared, formation of a gel-like material on a rubber molded product surface, which is a fear brought with formation of long chain branches, can be remarkably inhibited. As a result, a rubber molded product comprising such a copolymer rubber contains no gel-like material and therefore has excellent surface appearance. Further, the rubber molded product has excellent retention of shape, and therefore, production stability is good.

The metallocene catalysts having structures represented by the above formulas (i) to (vi) can be prepared by known synthesis processes. Such a known synthesis process is disclosed in, for example, International Publication No. 98/49212 Pamphlet. If necessary, a complex (metallocene catalyst) in a lower oxidation state can be prepared by using a reducing agent. Such a process is disclosed in USSN8/241,523.

(7) Mooney viscosity [$ML_{1+4}$]

The requirement (7) is that the Mooney viscosity [$ML_{1+4}$] as measured at 160°C is in the range of 40 to 160, preferably 50 to 150.

The Mooney viscosity is measured by the use of a Mooney viscometer (SMV202 type manufactured by Shimadzu Corporation) under the conditions of 160°C in accordance with JIS K6300.

From the rule of thumb, it has been recognized that the Mooney viscosity [$ML_{1+4}$] as measured at 160°C and the Mooney viscosity [$ML_{1+4}$] as measured at 100°C have the following correlation between them. For example, when the Mooney viscosity [$ML_{1+4}$] as measured at 160°C is 40, the Mooney viscosity [$ML_{1+4}$] as measured at 100°C becomes 95.

$$\{\text{Mooney viscosity } [ML_{1+4}] \text{ at } 100°C\} = 2.38 \times \{\text{Mooney viscosity } [ML_{1+4}] \text{ at } 160°C\}$$

Process for preparing copolymer rubber

The process for preparing a copolymer rubber of the invention is characterized by using the aforesaid metallocene catalyst, particularly the metallocene catalyst having a structure represented by the aforesaid formula (vi), and this process desirably has the following "step for obtaining a polymerization reaction solution".

The "step for obtaining a polymerization reaction solution" is a step for obtaining a polymerization reaction solution in which the concentration of a copolymer rubber obtained by copolymerizing ethylene [A], the α-olefin [B], the non-conjugated polyene [C] and the non-conjugated polyene [D] using an aliphatic hydrocarbon as a polymerization solvent in the presence of the aforesaid metallocene catalyst, particularly the metallocene catalyst having a structure represented by the aforesaid formula (vi), in the polymerization solvent is in the range of 8 to 12% by weight, preferably 8.5 to 12.0% by weight.

When the concentration of the copolymer rubber in the polymerization solvent is in the above range, the resulting copolymer rubber satisfies the aforesaid requirement (5), so that such a concentration is preferable. If the concentration of the copolymer rubber in the polymerization solvent exceeds 12% by weight, the polymerization solution is not uniformly stirred because of too high viscosity of the solution, and the polymerization reaction sometimes becomes difficult.

The "polymerization solvent" is, for example, an aliphatic hydrocarbon or an aromatic hydrocarbon. Examples of the aliphatic hydrocarbons include pentane, hexane and heptane. Of these, hexane is preferable from the viewpoints of separation from the resulting copolymer rubber and purification of the copolymer rubber.

As such a preparation process, there can be mentioned a continuous or batch process wherein the aforesaid catalyst is used as a main catalyst, a boron-based compound and/or an organoaluminum compound such as a trialkyl compound is used as a cocatalyst, an aliphatic hydrocarbon such as hexane is used as a solvent, and a reactor equipped with a stirrer is used.

Examples of the "boron-based compounds" include:

alkylammonium salts, such as trimethylammonium tetrakis(pentafluorophenyl)borate, di(hydrogenated tallow alkyl)methylammonium tetrakis(pentafluorophenyl)borate, triethylammonium tetrakis (pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-dimethylanilinium n-butyltris(pentafluorophenyl)borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(triisopropylsilyl)-2,3,5,6-tetrafluorophenyl)borate, N,N-dimethylanilinium pentafluorophenoxytris(pentafluorophenyl)borate, N,N-diethylanilinium tetrakis(pentafluorophenyl)borate, N,N-dimethyl-2,4,6-trimethylanilinium tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, N,N-dimethylanilinum tetrakis(2,3,4,6-tetrafluorophenyl)borate, N,N-diethylanilinum tetrakis(2,3,4,6-tetrafluorophenyl) borate, N,N-dimethyl-2,4,6-trimethylanilinum tetrakis(2,3,4,6-tetrafluorophenyl)borate, di(i-propyl)ammonium tetrakis(pentafluorophenyl)borate, tri(n-butyl)ammonium tetrakis(2,3,4,6-tetrafluorophenyl)borate, dimethyl (t-butyl) ammonium tetrakis (2, 3, 4, 6-tetrafluorophenyl)borate and dicyclohexylammonium tetrakis(pentafluorophenyl)borate;

tri-substituted phosphonium salts, such as triphenylphosphonium tetrakis(pentafluorophenyl)borate, tri(o-tolyl)phosphonium tetrakis(pentafluorophenyl)borate and tri(2,6-dimethylphenyl)phosphonium tetrakis(pentafluorophenyl)borate,

di-substituted oxonium salts, such as diphenyloxonium tetrakis(pentafluorophenyl)borate, di(o-tolyl)oxonium tetrakis (pentafluorophenyl)borate and di(2,6-dimethylphenyl)oxonium tetrakis(pentafluorophenyl)borate, and

di-substituted sulfonium salts, such as diphenylsulfonium tetrakis(pentafluorophenyl)borate, di(o-tolyl)sulfonium tetrakis(pentafluorophenyl)borate and bis(2,6-dimethylphenyl)sulfonium tetrakis(pentafluorophenyl)borate.

The "organoaluminum compound" is, for example, triisobutylaluminum (also referred to as "TIBA" hereinafter).

The reaction temperature can be raised up to 100°C because the catalyst is not deactivated even at high temperatures.

The polymerization pressure is more than 0 but not more than 8 MPa (gauge pressure), preferably more than 0 but not more than 5 Mpa (gauge pressure).

The reaction time (average residence time in the case where the copolymerization is carried out by a continuous process) is in the range of usually 0.5 minutes to 5 hours, preferably 10 minutes to 3 hours, though it varies depending upon the conditions such as catalytic concentration and polymerization temperature.

In the copolymerization, a molecular weight modifier such as hydrogen can be also used.

The molar ratio ([A]/[B]) of ethylene [A] charged to the $\alpha$-olefin [B] charged is in the range of preferably 25/75 to 80/20, more preferably 30/70 to 70/30.

The molar ratio ([C]/[D]) of the non-conjugated polyene [C] charged to the non-conjugated polyene [D] charged is in the range of preferably 85/15 to 99.5/0.5, more preferably 90/10 to 99/1.

The molar ratio ([A]/[C]) of ethylene [A] charged to the non-conjugated polyene [C] charged is in the range of preferably 70/30 to 99/1, more preferably 80/20 to 98/2.

The molar ratio ([A]/[D]) of ethylene [A] charged to the non-conjugated polyene [D] charged is in the range of preferably 70/30 to 99.9/0.1, more preferably 80/20 to 99.5/0.5.

By performing polymerization using the aforesaid catalyst, the non-conjugated polyene having a double bond, etc. are copolymerized in a high conversion, and proper amounts of long chain branches can be introduced into the resulting copolymer, so that such polymerization is preferable.

Rubber composition

The rubber composition of the invention is characterized by containing the above-mentioned "copolymer rubber", and other components can be appropriately added according to the purpose.

Examples of the "other components" include various additives, such as blowing agent, blowing assistant, reinforcing agent, inorganic filler, softener, anti-aging agent (stabilizer), processing aid, activator and moisture absorbent.

Further, a rubber other than the copolymer rubber of the invention can be added. The content of the copolymer rubber of the invention in the whole rubber composition is preferably not less than 20% by weight.

The rubber composition of the invention can be prepared by kneading the copolymer rubber of the invention and other components by a hitherto known kneading machine, such as a mixer, a kneader or a roll, at a given temperature. Since the copolymer rubber of the invention has excellent kneading properties, preparation of the rubber composition can be favorably carried out.

Blowing agent

Examples of the "blowing agents" which may be added when necessary include inorganic blowing agents, such as sodium bicarbonate and sodium carbonate; and organic blowing agents, specifically, nitroso compounds, such as N, N'-dinitrosopentamethylenetetramine and N,N'-dinitrosoterephthalamide; azo compounds, such as azodicarbonamide and azobisbutylonitrile; hydrazide compounds, such as benzenesulfonylhydrazide and p,p'-oxybis(benzenesulfonylhydrazide): and azide compounds, such as calcium azide and 4,4'-diphenylsulfonyl azide.

The amount of the blowing agent added is in the range of 0.2 to 30 parts by weight, preferably 0.5 to 25 parts by weight, more preferably 0.5 to 20 parts by weight, based on 100 parts by weight of the rubber components (copolymer rubber and other rubbers contained in the rubber composition).

Blowing assistant

In the present invention, a "blowing assistant" can be added together with the blowing agent, when necessary. The blowing assistant has functions of lowering decomposition temperature of the blowing agent, acceleration of decomposition and uniformalizing of bubbles.

Examples of the blowing assistants include organic acids, such as salicylic acid, phthalic acid, stearic acid, oxalic acid and citric acid, salts of the organic acids, urea and derivatives of urea.

Reinforcing agent and inorganic filler

In order to enhance mechanical properties of the rubber composition, such as tensile strength, tear strength and abrasion resistance, it is preferable to add a "reinforcing agent" to the rubber composition of the invention.

Examples of the reinforcing agents include commercially available "Asahi #55G" and "Asahi #50HG" (trade names, available from Asahi Carbon Co., Ltd.), carbon black of "Shiest" (trade name) series, such as SRF, GPF, FEF, MAF, HAF, ISAF, SAF, FT and MT (available from Tokai Carbon Co, Ltd.), reinforcing agents obtained by surface-treating these carbon black with a silane coupling agent, silica, activated calcium carbonate, finely powdered talc and finely powdered silicic acid. Of these, carbon black of "Asahi #55G", "Asahi #50HG" and "Shiest HAF" are preferable.

Examples of the "inorganic fillers" include light calcium carbonate, heavy calcium carbonate, talc and clay. Of these, heavy calcium carbonate is preferable. As the heavy calcium carbonate, commercially available "Whiten SB" (trade name, available from Shiraishi Calcium Kaisha, Ltd.) is employable.

The amount of the reinforcing agent and/or the inorganic filler added is in the range of usually 30 to 200 parts by weight, preferably 50 to 180 parts by weight, more preferably 70 to 160 parts by weight, based on 100 parts by weight of the rubber components. When the amount added is in the above range, kneading processability of the rubber composition and mechanical properties (e.g., strength and flexibility) and compression set of the resulting rubber molded product are excellent, so that such an amount is preferable.

Softener

The "softener" can be appropriately selected according to the use purpose and can be mixed singly or in combination of two or more kinds. Examples of the softeners include petroleum type softeners, such as process oil (e.g., "Diana Process Oil Ps-430" (trade name, available from Idemitsu Kosan Co., Ltd.)), lubricating oil, paraffinic oil, liquid paraffin, petroleum asphalt and vaseline: coal tar type softeners, such as coal tar and coal tar pitch; fatty oil type softeners, such as castor oil, linseed oil, rapeseed oil, soybean oil and coconut oil: waxes, such as beeswax, carnauba wax and lanoline: fatty acids and their salts, such as ricinolic acid, palmitic acid, stearic acid, barium stearate, calcium stearate and zinc laurate; naphthenic acid, pine oil, rosin and their salts; synthetic high-molecular substances, such as terpene resin, petroleum resin, atactic polypropylene and coumarone indene resin; ester type softeners, such as dioctyl phthalate, dioctyl adipate and dioctyl sebacate; and others, such as microcrystalline wax, liquid polybutadiene, modified liquid polybutadiene, liquid Thiokol, hydrocarbon-based synthetic lubricating oil, tall oil and factice. Of these, petroleum type softeners are preferable, and process oil is particularly preferable.

The amount of the softener added can be appropriately selected according to the use purpose and is usually a maximum of 200 parts by weight, preferably a maximum of 150 parts by weight, more preferably a maximum of 130 parts by weight, based on 100 parts by weight of the rubber components.

Anti-aging agent (stabilizer)

By adding the "anti-aging agent" to the rubber composition of the invention, it becomes possible to lengthen the product life, and this is the same as in a usual rubber composition. As such an anti-aging agent, a hitherto known

anti-aging agent, such as an amine type anti-aging agent, a phenol type anti-aging agent or a sulfur type anti-aging agent, is employable.

In more detail, there can be mentioned, for example, aromatic secondary amine type anti-aging agents, such as phenylbutylamine and N,N-di-2-naphthyl-p-phenylenediamine; phenol type anti-aging agents, such as dibutylhydroxytoluene and tetrakis[methylene(3,5-di-t-butyl-4-hydroxy)hydrocinnamate]methane; thioether type anti-aging agents, such as bis[2-methyl-4-(3-n-alkylthiopropionyloxy)-5-t-butylphenyl]sulfide; dithiocarbamic acid salt type anti-aging agents, such as nickel dibutyldithiocarbamate; and sulfur type anti-aging agents, such as 2-mercaptobenzoyldimidazole, zinc salt of 2-mercaptobenzimidazole, dilauryl thiodipropionate and distearyl thiodipropionate.

These anti-aging agents can be used singly or in combination of two or more kinds, and the amount of such an anti-aging agent added is in the range of usually 0.3 to 10 parts by weight, preferably 0.5 to 7.0 parts by weight, more preferably 0.7 to 5.0 parts by weight, based on 100 parts by weight of the rubber components. When the amount of the anti-aging agent added is in the above range, the surface of the resulting rubber composition is free from bloom and inhibition of vulcanization does not occur, so that such an amount is preferable.

Processing aid

As the "processing aids" which can be added in the invention, those generally added to rubbers as processing aids can be widely employed.

Examples of such processing aids include ricinolic acid, stearic acid, palmitic acid, lauric acid, barium stearate, zinc stearate, calcium stearate and esters. Of these, stearic acid is preferable.

The processing aid can be appropriately added in an amount of not more than 10 parts by weight, preferably not more than 8.0 parts by weight, more preferably not more than 5.0 parts by weight, based on 100 parts by weight of the rubber components. When the amount of the processing aid added is in the above range, the surface of the resulting rubber composition is free from bloom and inhibition of vulcanization does not occur, so that such an amount is preferable.

Activator

In the present invention, the "activator" which is added when necessary can be appropriately selected according to the use purpose and can be used singly or in combination of two or more kinds.

Examples of such activators include amines, such as di-n-butylamine, dicyclohexylamine, monoethanolamine, "Acting B" (trade name, available from Yoshitomi Pharmaceutical Industries, Ltd.) and "Acting SL" (trade name, available from Yoshitomi Pharmaceutical Industries, Ltd.); activators, such as diethylene glycol, polyethylene glycol, lecithin, triallyl-trimellitate and zinc compounds of aliphatic carboxylic acids or aromatic carboxylic acids (specifically, "Struktol activator 73", "Struktol IB 531", "Struktol FA541" (trade names, available from Schill & Seilacher Co.)); zinc peroxide adjusted substances, such as "ZEONET ZP" (trade name, available from Nippon Zeon Co., Ltd.); octadecyl trimethylammonium bromide, synthetic hydrotalcite, and special quaternary ammonium compounds (specifically, "Arquad 2HF" (trade name, available from Lion Akzo Co., Ltd.)). Of these, "Arquad 2HF" is preferable.

The amount of the activator added is in the range of 0.2 to 10 parts by weight, preferably 0.3 to 5 parts by weight, more preferably 0.5 to 4 parts by weight, based on 100 parts by weight of the rubber components.

Moisture absorbent

In the present invention, the "moisture absorbent" which is added when necessary can be appropriately selected according to the use purpose and can be used singly or in combination of two or more kinds.

Examples of such moisture absorbents include calcium oxide, silica gel, sodium sulfate, molecular sieves, zeolite and white carbon. Of these, calcium oxide is preferable.

The amount of the moisture absorbent added is in the range of 0.5 to 15 parts by weight, preferably 1.0 to 12 parts by weight, more preferably 1.0 to 10 parts by weight, based on 100 parts by weight of the rubber components.

In addition, additives usually used for rubbers can be arbitrarily added within limits not detrimental to the object of the present invention.

Crosslinked rubber

The crosslinked rubber of the invention is characterized in that it is obtained by crosslinking the above-mentioned rubber composition. As methods to crosslink the rubber composition, the following methods (i) and (ii) can be mentioned.

(i) A method wherein the rubber composition of the invention to which a crosslinking agent has been added is usually

preformed to give a desired shape by a preforming method using heating mode/heating bath, such as extruder, calender roll, press, injection molding machine, transfer molding machine, hot air, glass bead fluidized bed, UHF (ultra high frequency electromagnetic wave), steam and LCM (molten salt bath), and simultaneously with the preforming, heating is carried out, or the resulting preform is introduced into a vulcanizing bath, followed by heating.
(ii) A method wherein the rubber composition of the invention is preformed by the above method and irradiated with electron rays.

In the case of the method (i), the following "vulcanizing agent" is preferably used as the "crosslinking agent", and if necessary, the following "vulcanization accelerator" and/or the following "vulcanization assistant" can be used in combination.
The heating is desirably carried out at a temperature of generally 140 to 300°C, preferably 150 to 270°C, more preferably 150 to 250°C, for a heating time of usually 0.5 to 30 minutes, preferably 0.5 to 20 minutes, more preferably 0.5 to 15 minutes.

Vulcanizing agent

As the "vulcanizing agent", a sulfur-based compound, an organic peroxide, a phenolic resin, or an oxime compound is employable.
Examples of the sulfur-based compounds include sulfur, sulfur chloride, sulfur dichloride, morpholine disulfide, alkylphenol disulfide, tetramethylthiuram disulfide and selenium dithiocarbamate.
Of these, sulfur and tetramethylthiuram disulfide are preferable. The sulfur-based compound can be added in an amount of usually 0.3 to 10 parts by weight, preferably 0.5 to 5.0 parts by weight, more preferably 0.7 to 4.0 parts by weight, based on 100 parts by weight of the rubber components. When the amount of the sulfur-based compound added is in the above range, the sulfur-based compound does not cause blooming on the surface of the resulting molded product and the molded product exhibits excellent crosslink properties, so that such an amount is preferable.
Examples of the "organic peroxides" include dicumyl peroxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3, di-t-butyl peroxide, di-t-butylperoxy-3,3,5-trimethylcyclohexane and t-dibutyl hydroperoxide. Of these, dicumyl peroxide, di-t-butyl peroxide and di-t-butylperoxy-3,3,5-trimethylcyclohexane are preferable.
The amount of the organic peroxide added is in the range of usually 0.001 to 0.05 mol, preferably 0.002 to 0.02 mol, more preferably 0.005 to 0.015 mol, based on 100 g of the rubber components. When the amount of the organic peroxide added is in the above range, the organic peroxide does not cause blooming on the surface of the resulting molded product and the molded product exhibits excellent crosslink properties, so that such an amount is preferable.

Vulcanization accelerator

When the sulfur-based compound is used as the vulcanizing agent, it is preferable to use a "vulcanization accelerator" in combination.
Examples of the vulcanization accelerators include thiazol type vulcanization accelerators, such as N-cyclohexyl-2-benzothiazole sulfenamide, N-oxydiethylene-2-benzothiazole sulfenamide, N,N'-diisopropyl-2-benzothiazole sulfenamide, 2-mercaptobenzothiazole (commercially available one: "Sanceler M" (trade name, available from Sanshin Chemical Industry Co., Ltd.) or the like), 2-(4-morpholinodithio)benzothiazole (commercially available one: "Nocceler MDB-P" (trade name, available from Sanshin Chemical Industry Co., Ltd.) or the like), 2-(2,4-dinitrophenyl)mercaptobenzothiazole, 2-(2,6-diethyl-4-morpholinothio)benzothiazole and dibenzothiazyl disulfide; guanidine type vulcanization accelerators, such as diphenylguanidine, triphenylguanidine and diorthotolylguanidine; aldehyde-amine type vulcanization accelerators, such as acetaldehyde-aniline condensate and butylaldehyde-aniline condensate; imidazoline type vulcanization accelerators, such as 2-mercaptoimidazoline; thiourea type vulcanization accelerators, such as diethylthiourea and dibutylthiourea; thiuram type vulcanization accelerators, such as tetramethylthiuram monosulfide and tetramethylthiuram disulfide; dithio acid salt type vulcanization accelerators, such as zinc dimethyldithiocarbamate, zinc diethyldithiocarbamate, zinc dibutyldithiocarbamate (commercially available one: "Sanceler BZ" (trade name, available from Sanshin Chemical Industry Co., Ltd.) and tellurium diethyldithiocarbamate; thiourea type vulcanization accelerators, such as ethylenethiourea (commercially available one: "Sanceler 22-C" (trade name, available from Sanshin Chemical Industry Co., Ltd.) and N,N'-diethylthiourea; xanthate type vulcanization accelerators, such as zinc dibutylxanthate; and zinc oxide, such as zinc white (commercially available one: "META-Z102" (trade name, available from Inoue calcium Corporation).
The amount of the vulcanization accelerator added is in the range of usually 0.1 to 20 parts by weight, preferably 0.2 to 15 parts by weight, more preferably 0.5 to 10 parts by weight, based on 100 parts by weight of the rubber components. When the amount of the vulcanization accelerator added is in the above range, the vulcanization accelerator

does not cause blooming on the surface of the resulting molded product and the molded product exhibits excellent crosslink properties, so that such an amount is preferable.

Vulcanization assistant

The "vulcanization assistant" can be appropriately selected according to the use purpose and can be used singly or in combination of two or more kinds.
Examples of the vulcanization assistants include magnesium oxide and zinc white (commercially available one: "META-Z102" (trade name, available from Inoue calcium Corporation) . The amount of the vulcanization assistant added is in the range of usually 1 to 20 parts by weight based on 100 parts by weight of the rubber composition.
When the organic peroxide is used as the vulcanizing agent, it is preferable to use a vulcanization assistant in combination.
Examples of such vulcanization assistants include sulfur; quinonedioxime type vulcanization assistants, such as p-quinonedioxime; acrylic type vulcanization assistants, such as ethylene glycol dimethacrylate and trimethylolpropane trimethacrylate; allyl type vulcanization assistants, such as diallyl phthalate and triallyl isocyanurate; maleimide type vulcanization assistants; and divinylbenzene. The amount of the vulcanization assistant added is in the range of usually 0.5 to 2 mol, preferably 0.5 to 1.5 mol, based on 1 mol of the organic peroxide used, more preferably equimolar amount to the organic peroxide.
In the molding/vulcanization process, a mold may be used or may not be used. If a mold is not used, the rubber composition is usually continuously molded and vulcanized.
In the case of the method (ii) wherein the rubber composition is preformed by the above performing and irradiated with electron rays, the preformed rubber composition is irradiated with electron rays having energy of 0.1 to 10 MeV so that the absorbed dose will become usually 0.5 to 35 Mrad, preferably 0.5 to 20 Mrad, more preferably 1 to 10 Mrad.

Rubber molded product

The rubber molded product of the invention is characterized in that it is obtained by the use of the aforesaid crosslinked rubber as a raw material, and the rubber molded product is preferably obtained by further subjecting the crsslinked rubber to foaming. Since the copolymer rubber is excellent in processability, the aforesaid molding can be favorably carried out, and the resulting rubber molded product is excellent in compression set. Therefore, such rubber molded products are extremely useful as rubber articles in various fields.
In the case where the rubber molded product is foamed, an expansion ratio of 1.3 to 3.0 times is preferable for, for example, sponge materials for weatherstrips, and an expansion ratio of more than 3.0 times but not more than 30 times is preferable for, for example, highly foamed sponge materials used for heat-insulating sponge, and dam rubber.
Examples of the rubber molded products include sponge materials for weatherstrips, such as a sponge for door sponge, a sponge for opening trim, a sponge for hood seal and a sponge for trunk seal; and highly foamed sponge materials, such as a heat-insulating sponge and a dam rubber.

EXAMPLES

Next, the present invention is further described with reference to the following examples, but it should be construed that the invention is in no way limited to those examples. Properties of the copolymer rubbers obtained were measured in the following manner.

Content ratio of structural units derived from component [A] to structural units derived from component [B]

Content ratios (molar ratio and weight ratio, [A]/[B]) of the structural units derived from the component [A] to the structural units derived from the component [B] were determined by strength measurement with a $^{13}C$-NMR spectrometer.

Contents of structural units derived from component [C] and structural units derived from component [D]

Contents (% by mol and % by weight)) of the structural units derived from the component [C] and the structural units derived from the component [D] were determined by strength measurement with a $^{13}C$-NMR spectrometer.
Composition analysis of a copolymer rubber (molar quantities of structural units contained in a copolymer rubber) by a $^{13}C$-NMR spectrometer is described below, taking copolymer rubbers obtained from ethylene, propylene, ENB and VNB as examples.
The structure (composition) analysis of an ethylene/propylene/ENB copolymer by a $^{13}C$-NMR spectrometer

was carried out based on C.J. Carman, R.A. Harrington and C.E. Wilkes, Macromolecules, 10, pp 536-544 (1977), Masahiro Kakugo, Yukio Naito, Kooji Mizunuma and Tatsuya Miyatake, Macromolecules, 15, pp 1150-1152 (1982), and G. Van der Velden, Macromolecules, 16, pp 85-89 (1983), and the structure analysis of a VNB-based copolymer was carried out based on Harri. Lasarov, Tuula T. Pakkanen, Macromol. Rapid Commun., 20, pp 356-360 (1999), and Harri Lasarov*, Tuula T. Pakkanen, Macrumol. Rapid Commun., 22, pp 434-438 (2001).

First, integrated values of peaks derived (1) ethylene, (2) propylene, (3) ENB and (4) VNB were each determined by a $^{13}$C-NMR spectrometer.

(1) ethylene: [integrated value of peak derived from ethylene chain + [integrated value of peak derived from ethylene-propylene chain]/2]
(2) propylene: [integrated value of peak derived from propylene chain + [integrated value of peak derived from ethylene-propylene chain]/2]
(3) ENB: integrated value of the 3-position peak of ENB
(4) VNB: integrated value of the 7-position peak of VNB

(ENB)

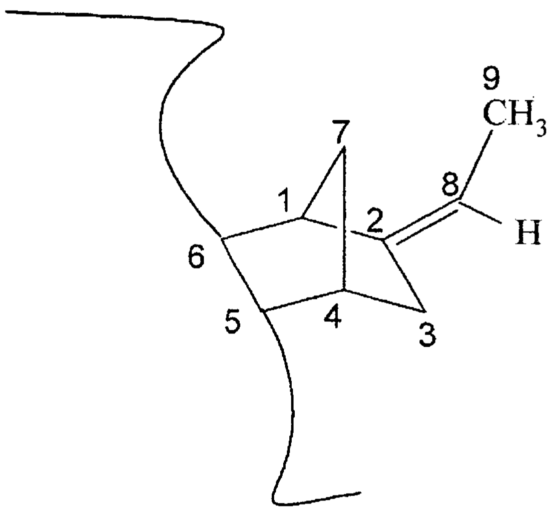

E form

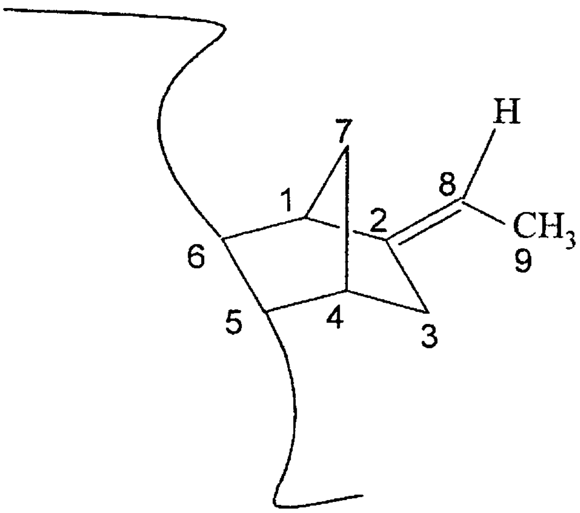

Z form

(VNB)

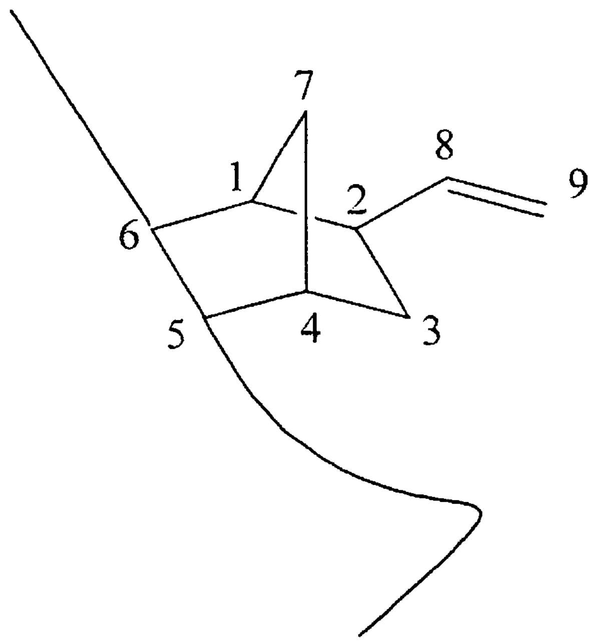

endo (n)

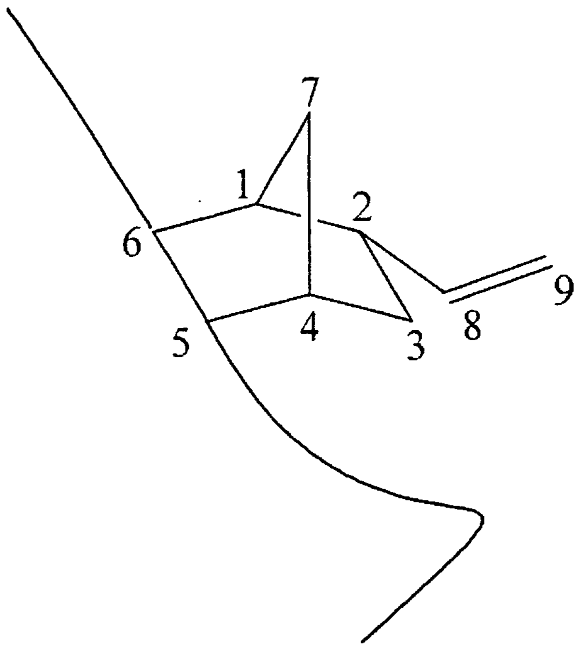

exo (x)

From the resulting integrated value ratio, each content (% by mol) was calculated. Conversion to "% by weight" was carried out taking a molecular weight of ethylene, a molecular weight of propylene and a molecular weight of each of ENB and VNB to be 28.05, 42.08 and 120.2, respectively.

Apparent iodine value derived from VNB

Apparent iodine value of the copolymer rubber derived from VNB (molecular weight: 120.2) used as the component (D) was calculated in the following manner using a $^{1}H$-NMR spectrometer and a $^{13}C$-NMR spectrometer.

First, a content (% by weight) of the structural units in the copolymer rubber was determined by a $^{13}C$-NMR spectrometer.

Then, an integrated value (-1) of a peak derived from ENB and an integrated value (2) of a peak derived from vinyl group of VNB were determined by a $^{1}H$-NMR spectrometer. The integrated values of peaks represented by (a), (b) and (c) in the following formulas (1) and (2) indicate integrated values of peaks of protons represented by (a), (b) and (c) in the following formulas (X) and (Y), respectively.

(1) Integrated value of peak derived from ENB: (a)={total of plural peaks in the vicinity of 4.7 to 5.3 ppm}-2× (c) }
Among the "plural peaks in the vicinity of 4.7 to 5.3 ppm", the peak (a) and the peak (b) were also detected, and therefore, the peak of only (a) was calculated from the above formula.
(2) Integrated value of peak derived from vinyl group of VNB: (c)=(total of peaks in the vicinity of 5.5 to 6.0 ppm)

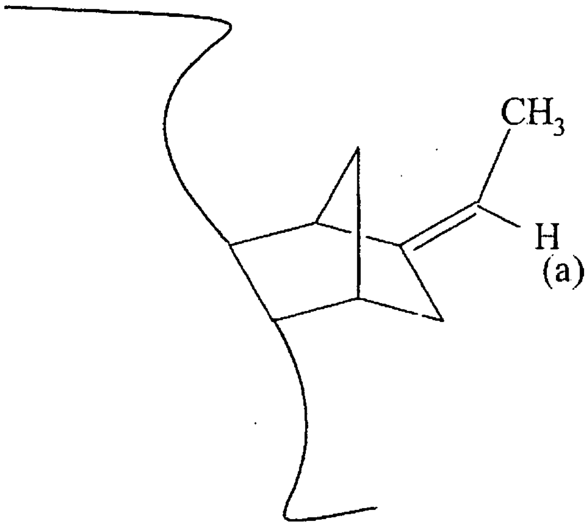

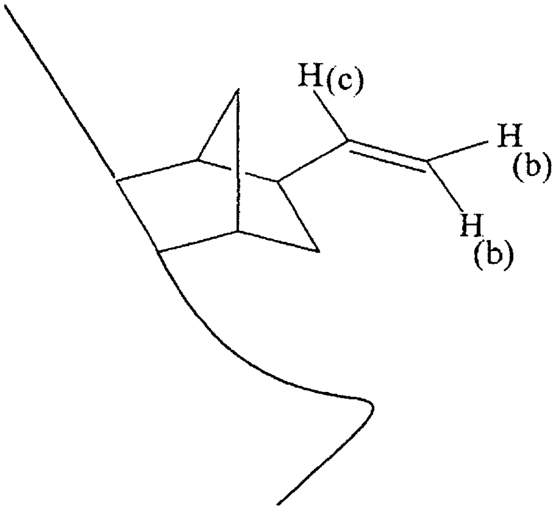

(X) (Y)

Using the resulting integrated values, an apparent iodine value derived from VNB (molecular weight: 120.2) was calculated from the following formula. The molecular weight of iodine is 253.81.

Apparent iodine value derived from VNB = {integrated value (c) of peak derived from vinyl group of VNB}/{integrated value (a) of peak derived from ENB}×{content (% by weight) of ENB determined by $^{13}$C-NMR spectrometer}×253.81/120.2

Intrinsic viscosity [η]

Intrinsic viscosity [η] (dl/g) of the copolymer rubber was measured in decalin at 135°C.

Mooney viscosity [$ML_{1+4}$(160°C)]

Mooney viscosity [$ML_{1+n}$(160°C)] was measured by a Mooney viscometer (SMV202 type, manufactured by Shimadzu Corporation) under the conditions of 160°C in accordance with JIS K6300.

Dependence of viscosity [η*] on frequency

η*(0.01) and η*(10) were measured by the use of a viscoelasticity tester (type: RDS-2) manufactured by Rheometric Scientific Inc. Specifically, a sample in the form of a disc of 25 mm (diameter) × 2 mm (thickness) obtained from a sheet of 2 mm thickness having been pressed at 190°C was used, and the measurement was carried out under the following conditions. As data processing software, RSI Orchestrator (available from Rheometric Scientific Inc.) was used.

Geometry: parallel plate
Measuring temperature: 190°C
Frequency: 0.01 to 500 rad/sec
Strain: 1.0%

Under the above conditions, dependence of viscosity [η*] on frequency was measured. The viscosity [η*] at 0.01 rad/sec and the viscosity [η*] at 10 rad/sec are represented by η*(0.01) and η*(10), respectively. Using the resulting values, calculation was made from the following formula.

$$Log\{\eta^*(0.01)\}/Log\{\eta^*(10)\}$$

Example 1

In a 300-liter polymerizer equipped with a stirrer, tetrapolymerization reaction of ethylene as the component [A], propylene as the component [B], 5-ethylidene-2-norbornene (ENB) as the component [C] and 5-vinyl-2-norbornene (VNB) as the component [D] was continuously carried out at 80°C.

As a polymerization solvent, hexane (final concentration: 90.8% by weight) was used, and ethylene, propylene, ENB and VNB were continuously fed so that the ethylene concentration, the propylene concentration, the ENB concentration and the VNB concentration would become 3.1% by weight, 4.6% by weight, 1.4% by weight and 0.11% by weight, respectively.

With maintaining the polymerization pressure at 0.8 MPa, [N-(1,1-dimethylethyl)-1,1-dimethyl-1-[1, 2, 3, 3A, 8A-η]-1,5,6,7-tetrahydro-2-methyl-S-indacene-1-yl]silaneaminate(2-)-κN] [(1,2,3,4-η)-1,3-bentadiene] titanium which was a metallocene catalyst having a structure represented by the aforesaid formula (vi) was continuously fed as a main catalyst so that the concentration would become 0.0013 mmol/liter. As a cocatalyst, $(C_6H_5)_3CB(C_6F_5)_4$ was continuously fed so that the concentration would become 0.0066 mmol/liter, and as an organoaluminum compound, triisobutylaluminum (TIBA) was continuously fed so that the concentration would become 0.0154 mmol/liter. The metallocene catalyst having a structure represented by the formula (vi) was synthesized in accordance with a process described in WO98/49212.

Thus, a copolymer rubber composed of ethylene, propylene, ENB and VNB was obtained in the form of a solution of 10.8% by weight. To the polymer solution drawn out from the lower part of the polymerizer, a small amount of methanol was added to terminate the polymerization reaction, and the copolymer rubber was separated from the solvent by steam stripping treatment and then vacuum dried for one day and one night at 80°C. The polymerization conditions and the properties of the resulting copolymer rubber are set forth in Table 1.

Examples 2 to 7

Copolymer rubbers were obtained in the same manner as in Example 1 according to the polymerization conditions shown in Table 1. The properties of the resulting copolymer rubbers are set forth in Table 1.

Comparative Example 1

A copolymer rubber was obtained in the same manner as in Example 1 according to the polymerization conditions shown in Table 1. The properties of the resulting copolymer rubber are set forth in Table 1.

Comparative Example 2

A copolymer rubber was obtained in the same manner as in Example 3, except that VNB was not fed. The polymerization conditions and the properties of the resulting copolymer rubber are set forth in Table 1.

Comparative Example 3

In a 15-liter polymerizer equipped with a stirrer, tetrapolymerization reaction of ethylene, propylene, 5-ethylidene-2-norbornene (ENB) and 5-vinyl-2-norbornene (VNB) was continuously carried out. As a polymerization solvent, hexane was continuously fed at a rate of 5 1/hr from the upper part of the polymerizer, and on the other hand, the polymerization solution was continuously drawn out from the lower part of the polymerizer so that the amount of the polymerization solution in the polymerizer would always become 5 liters. As catalysts, $VOCl_3$ and $Al(C_2H_5)_{1.5}Cl_{1.5}$ were used. That is to say, $VOCl_3$ was continuously fed so that the vanadium atom concentration would become 0.55 mmol/liter, and $Al(C_2H_5)_{1.5}Cl_{1.5}$ was continuously fed so that the aluminum atom concentration would become 3.3 mmol/liter.

As monomers, ethylene and propylene were continuously fed at rates of 170 1/hr and 375 1/hr, respectively. Further, ENB and VNB were continuously fed so that the ENB concentration and the VNB concentration would become 7.5 g/liter and 0.39 g/liter, respectively. As a molecular weight modifier, hydrogen was used, and this hydrogen was fed so that the hydrogen concentration in the gas phase of the polymerizer would become 3.1% by mol. Copolymerization reaction was carried out at a temperature of 40°C by circulating cooling water in a jacket outside the polymerizer with maintaining the polymerization pressure at 0.7 MPa.

Through such a reaction, a copolymer rubber composed of ethylene, propylene, ENB and VNB was obtained

in the form of a homogeneous solution. To the polymer solution drawn out from the lower part of the polymerizer, a small amount of methanol was added to terminate the polymerization reaction, and the copolymer rubber was separated from the solvent by steam stripping treatment and then vacuum dried for one day and one night at 80°C. Through the above operations, a copolymer rubber composed of ethylene, propylene, ENB and VNB was obtained at a rate of 265 g/hr. The properties of the resulting copolymer rubber are set forth in Table 1.

Comparative Example 4

A copolymer rubber was obtained in the same manner as in Comparative Example 3, except that the VNB concentration was changed to 0.84 g/liter. The properties of the resulting copolymer rubber are set forth in Table 1.

Comparative Example 5

A copolymer rubber was obtained in the same manner as in Comparative Example 3, except that VNB was not fed. The properties of the resulting copolymer rubber are set forth in Table 1.

Table 1

| | | Polymerization conditions | | | | | | | | Copolymer Rubber Concentration | Polymerizatic Temperature |
|---|---|---|---|---|---|---|---|---|---|---|---|
| | | Concentration (wt%) | | | | | Main Catalyst | Cocatalyst | TIBA | | |
| | | Hexane | Ethylene | Propylene | ENB | VNB | (mmol/l) | (mmol/l) | (mmol/l) | (wt%) | (°C) |
| Ex. | 1 | 90.8 | 3.10 | 4.60 | 1.40 | 0.11 | 0.0013 | 0.0066 | 0.0154 | 10.8 | 80.0 |
| | 2 | 87.9 | 4.41 | 5.60 | 2.00 | 0.13 | 0.0010 | 0.0065 | 0.0172 | 10.5 | 80.0 |
| | 3 | 88.2 | 3.97 | 5.91 | 1.79 | 0.09 | 0.0011 | 0.0060 | 0.0421 | 10.6 | 80.0 |
| | 4 | 84.2 | 5.40 | 8.40 | 1.90 | 0.09 | 0.0008 | 0.0042 | 0.2000 | 10.1 | 80.0 |
| | 5 | 85.6 | 4.88 | 7.22 | 2.19 | 0.09 | 0.0011 | 0.0054 | 0.0820 | 9.1 | 80.0 |
| | 6 | 86.8 | 4.41 | 6.80 | 1.88 | 0.09 | 0.0011 | 0.0053 | 0.0752 | 11.8 | 80.0 |
| | 7 | 82.6 | 4.20 | 10.80 | 2.30 | 0.12 | 0.00056 | 0.0028 | 0.0539 | 10.5 | 95.0 |
| Comp. Ex. | 1 | 76.2 | 7.20 | 14.00 | 2.40 | 0.18 | 0.00043 | 0.0022 | 0.1667 | 7.0 | 80.0 |
| | 2 | 86.8 | 4.91 | 7.57 | 2.15 | - | 0.00076 | 0.0036 | 0.0711 | 10.2 | 80.0 |
| | 3 | Use of vanadium catalyst (Detailed polymerization conditions are described in the text.) | | | | | | | | | |
| | 4 | | | | | | | | | | |
| | 5 | | | | | | | | | | |

| | | Properties of copolymer rubber | | | | | | |
|---|---|---|---|---|---|---|---|---|
| | | Ethylene/ Propylene | ENB+VNB | Intrinsic viscosity [η] | ENB/VNB | Moony viscosity $[ML_{1+4}(160°C)]$ | Log{η*(0.01)}/ Log{η*(10)} | 0.0753x (iodine value) +1.42 |
| | | (molar ratio) | (mol%) | (dl/g) | (molar ratio) | | | |
| Ex. | 1 | 64/36 | 2.65 | 3.21 | 90.4/9.6 | 110 | 1.546 | 1.52 |
| | 2 | 68/32 | 2.69 | 3.23 | 90.5/9.5 | 111 | 1.553 | 1.52 |
| | 3 | 64/36 | 2.90 | 3.35 | 93.4/6.6 | 118 | 1.513 | 1.48 |
| | 4 | 64/36 | 2.91 | 3.00 | 94.0/6.0 | 91 | 1.506 | 1.48 |
| | 5 | 65/35 | 2.77 | 3.14 | 92.9/7.1 | 105 | 1.517 | 1.49 |
| | 6 | 66/34 | 2.74 | 2.80 | 92.9/7.1 | 69 | 1.548 | 1.49 |
| | 7 | 64/36 | 2.83 | 3.09 | 92.2/7.8 | 97 | 1.496 | 1.47 |
| Comp. Ex. | 1 | 65/35 | 2.74 | 3.11 | 93.9/6.1 | 108 | 1.461 | 1.49 |
| | 2 | 64/36 | 2.61 | 3.34 | - | 80 | 1.365 | 1.42 |
| | 3 | 68/32 | 2.53 | 2.80 | 94.5/5.5 | 71 | 1.470 | 1.48 |
| | 4 | 70/30 | 2.94 | 3.30 | 92.3/7.7 | 115 | 1.510 | 1.52 |
| | 5 | 71/29 | 2.63 | 3.41 | - | 82 | 1.377 | 1.42 |

Measurement and evaluation of properties of the resulting rubber composition were carried out in the following manner.

Minimum viscosity [Vm] and scorch time [t5]

Change of Mooney viscosity was measured at 125°C by the use of a Mooney viscometer (SMV202 type, manufactured by Shimadzu Corporation) to determine a minimum viscosity [Vm] from the beginning of the measurement, and further, a period of time required for rise of viscosity by 5 points from the minimum viscosity [Vm] was measured. The resulting time was regarded as a scorch time [t5] (min).

Evaluation of extruded design surface profile

100 Parts by weight of the copolymer rubber were kneaded with 5 parts by weight of "META-Z102" (trade name, available from Inoue calcium Corporation) as a vulcanization assistant, 2 parts by weight of stearic acid as a processing aid, 2 parts by weight of "Arquad 2HF" (trade name, available from Lion Akzo Co., Ltd.) as an activator, 120 parts by weight of "Asahi #55G" (trade name, available from Asahi Carbon Co., Ltd.) as a reinforcing agent, 55 parts by weight of "Whiten SB" (trade name, available from Shiraishi Calcium Kaisha, Ltd.) as an inorganic filler and 60 parts by weight of "Diana Process Oil PS-430" (trade name, Idemitsu Kosan Co., Ltd.) as a softener by the use of MIXTRON BB MIXER (manufactured by Kobe Steel, Ltd., BB-4 type, volume: 2.95 liters, rotor: 4WH).

The kneading was carried out under the conditions of a rotor rotating speed of 50 rpm, a floating weight pressure of 3 $kg/cm^2$, a kneading time of 15 minutes and a kneadate discharge temperature of 170°C.

The resulting kneadate was extruded to give a shape of a flat plate (3 cm (width) × 2 mm (thickness)) by the use of an extruder having a diameter of 50 mm, and the extruded design surface profile was subjected to three-rank evaluation by the following criteria to evaluate kneading stability.

AA: The surface has excellent smoothness and exhibits good appearance.

BB: Some depressions and protrusions are observed, and the surface is poor in gloss.

CC: A large number of fine depressions and protrusions are observed, and the surface is poor in smoothness.

Further, properties of a sponge in the form of a tube (also referred to as a "tubular sponge" hereinafter) obtained by molding a foamed crosslinked rubber were measured in the following manner.

Tensile stress at break [TB] and tensile elongation at break [ENB]

The upper part of the tubular sponge was punched in the lengthwise direction by the use of a No. 3 dumbbell described in JIS K-6251 (1993) to prepare a test specimen.

The test specimen was subjected to tensile test under the conditions of a measuring temperature of 25°C and a stress rate of 500 mm/min in accordance with a method defined in the section 3 of JIS K-6251, to determine a tensile stress at break [TB] (MPa) and a tensile elongation at break [EB] (%).

Specific gravity

The upper part of the tubular sponge was punched to prepare a test specimen of 20.mm × 20 mm, and dirt on the surface of the test specimen was wiped off with an alcohol.

This test specimen was set on an automatic specific gravimeter (M-1 type manufactured by Toyo Seiki Seisakusho, Ltd.) in an atmosphere of 25°C, and from a difference between mass in air and mass in pure water, a specific gravity was determined.

Compression set [CS]

The tubular sponge was cut in the lengthwise direction to prepare a test specimen of 30 mm, and the resulting test specimen was set on a compression set measuring mold. The test specimen was compressed so that the height of the specimen would become 1/2 of the height measured before application of a load. Then, the test specimen with the mold was set in a Geer oven at 70°C and subjected to heat treatment for 22 hours or 197 hours.

Subsequently, the test specimen was taken out from the mold and allowed to cool for 30 minutes. Thereafter, the height of the test specimen was measured, and a compression set [CS] (%) was calculated from the following formula.

Compression set [CS] (%) = $\{(t_0-t_1)/(t_0-t_2)\}\times100$

$t_0$: height of test specimen before test

$t_1$: height of test specimen after heat treatment and cooling for 30 minutes

$t_2$: height of test specimen set on measuring mold

Retention of shape

A tubular product of the rubber composition obtained by the use of a tubular die having an inner size of 13 mm (height) × 11 mm (width) and having a wall thickness of 1.5 mm was crosslinked and foamed without changing the height, the length in the horizontal direction (width) and the lengthwise and crosswise directions of the tubular product, to obtain a sponge. Then, a ratio of the height of the resulting sponge to the length in the horizontal direction (width) was determined, and the resulting ratio was regarded as a retention of shape (%).

Retention of shape (%) = $(L/D)/(L_0/D_0)\times100$

In the above formula, $L_0$ is a height of the tubular product of the rubber compositions, Do is a width of the tubular product of the rubber composition, L is a height of the tubular sponge, and D is a width of the tubular sponge.

Surface roughness

Surface roughness of the tubular sponge was evaluated by expressing depressions and protrusions on the upper surface of the tubular sponge in numerals by the use of a feeler type surface roughness measuring device. Actually, the sponge was cut to give a sample having a length of 50 mm, and a value (hl-h2) obtained by subtracting the "total (h2) of heights of depressions of the minimum depression to the 10th depression therefrom" in the sample from the "total (h1) of heights of protrusions of the maximum protrusion to the 10th protrusion therefrom" in the sample was divided by 10, and the resulting value was regarded as a surface roughness (μm) of the tubular sponge.

Example 8

The rubber composition and the tubular sponge of the invention were obtained by the following preparation processes. In the preparation of the rubber composition of the invention, first, an unvulcanized unfoamed rubber composition was prepared by kneading 100 parts by weight of the copolymer rubber obtained in Example 1 with 5 parts by weight of "META-Z102" (trade name, available from Inoue calcium Corporation) as a vulcanization assistant, 2 parts by weight of stearic acid as a processing aid, 2 parts by weight of "Arquad 2HF" (trade name, available from Lion Akzo Co., Ltd.) as an activator, 120 parts by weight of "Asahi #55G" (trade name, available from Asahi Carbon Co., Ltd.) as a reinforcing agent, 55 parts by weight of "Whiten SB" (trade name, available from Shiraishi Calcium Kaisha, Ltd.) as an inorganic filler and 60 parts by weight of "Diana Process Oil PS-430" (trade name, Idemitsu Kosan Co., Ltd.) as a softener by the use of MIXTRON BB MIXER (manufactured by Kobe Steel, Ltd., BB-4 type, volume: 2.95 liters, rotor: 4WH).

The kneading was carried out under the conditions of a rotor rotating speed of 50 rpm, a floating weight pressure of 3 $kg/cm^2$, a kneading time of 5 minutes and a kneadate discharge temperature of 145°C.

Then, the temperature of the resulting kneadate was confirmed to become 40°C, and thereafter, the kneadate was roll milled with 1.0 part by weight of "Sanceler M" (trade name, available from Sanshin Chemical Industry Co., Ltd.) as a vulcanization accelerator, 1.0 part by weight of "Nocceler MDB-P" (trade name, available from Sanshin Chemical Industry Co., Ltd.) as a vulcanization accelerator, 2.0 parts by weight of "Sanceler BZ" (trade name, available from Sanshin Chemical Industry Co., Ltd.) as a vulcanization accelerator, 1.0 part by weight of "Sanceler 22-C" (trade name, available from Sanshin Chemical Industry Co., Ltd.) as a vulcanization accelerator, 1.5 parts by weight of sulfur as a vulcanizing agent, 3.0 parts by weight of 4,4'-oxybis(benzenesulfonylhydrazide) (OBSH) as a blowing agent and 5.0 parts by weight of calcium oxide as a moisture absorbent by the use of 14-inch rolls.

The roll milling was carried out under the conditions of roll temperatures of 65°C/50°C (front roll/back roll), roll peripheral speeds of 13 rpm/11.5 rpm (front roll/back roll), a roll distance of 5 mm and a roll milling time of 15 minutes to obtain a rubber composition.

Next, the rubber composition was extruded by an extruder having a diameter of 60 mm equipped with a tubular die (inner size: 13 mm (height) × 11 mm (width), wall thickness: 1.5 mm) under the conditions of a die temperature of 80°C and a cylinder temperature of 60°C to produce a tubular extruded product. Simultaneously with the extrusion, the extruded product was introduced into a vulcanizing bath, and it was heated at a temperature of 250°C for 5 minutes to perform crosslinking and foaming. Thus, a tubular sponge was obtained.

The property values and the evaluation results of the rubber composition and the tubular sponge are set forth in Table 2.

Examples 9 to 14

Rubber compositions and tubular sponges were obtained in the same manner as in Example 8, except that

the copolymer rubbers obtained in Examples 2 to 7 were used, respectively.

The property values and the evaluation results of the rubber compositions and the tubular sponges are set forth in Table 2.

Comparative Examples 6 to 10

Rubber compositions and tubular sponges were obtained in the same manner as in Example 8, except that the copolymer rubbers obtained in Comparative Examples 1 to 5 were used, respectively.

The property values and the evaluation results of the rubber compositions and the tubular sponges are set forth in Table 2.

Table 2

| | | | Ex. | | | | | | | Comp. Ex. | | | | |
|---|---|---|---|---|---|---|---|---|---|---|---|---|---|---|
| | | | 8 | 9 | 10 | 11 | 12 | 13 | 14 | 6 | 7 | 8 | 9 | 10 |
| Copolymer rubber used | | | Ex.1 | Ex.2 | Ex.3 | Ex.4 | Ex.5 | Ex.6 | Ex.7 | Comp. Ex.1 | Comp. Ex.2 | Comp. Ex.3 | Comp. Ex.4 | Comp. Ex.5 |
| Rubber composition | Minimum viscosity [Vm] | | 41 | 40 | 43.2 | 39.2 | 41.5 | 39.2 | 40.6 | 38.9 | 42.1 | 35.2 | 40.2 | 38.9 |
| | Scorch time [t5] (min) | | 3.5 | 3.6 | 3.7 | 3.4 | 3.6 | 3.4 | 3.3 | 3.6 | 4.5 | 3.6 | 3.3 | 3.6 |
| | Evaluation of extruded design surface profile | | BB | BB | AA | AA | AA | AA | AA | BB | AA | BB | CC | AA |
| Tubular sponge | Specific gravity | | 0.55 | 0.56 | 0.54 | 0.6 | 0.52 | 0.55 | 0.57 | 0.6 | 0.75 | 0.55 | 0.54 | 0.7 |
| | Tensile stress at break [TB] (MPa) | | 2.4 | 2.6 | 2.3 | 2.6 | 2.2 | 2.6 | 2.7 | 3 | 5.3 | 2.2 | 2.5 | 5.4 |
| | Tensile elongation at break [EB] (MPa) | | 230 | 290 | 260 | 260 | 240 | 260 | 280 | 300 | 300 | 220 | 250 | 320 |
| | Compression set [CS] (%) | 70°C x 22hr | 14 | 15 | 14 | 13 | 14 | 13 | 14 | 18 | 16 | 17 | 15 | 15 |
| | | 70°C x 197hr | 29 | 31 | 31 | 31 | 32 | 31 | 29 | 37 | 38 | 38 | 34 | 35 |
| | Retention of shape (%) | | 93.6 | 95.2 | 88.1 | 87.1 | 89 | 95.4 | 85.1 | 79.5 | 70 | 78.6 | 87.4 | 71 |
| | Surface roughness (μm) | | 12.1 | 11.5 | 11.8 | 11.9 | 12.1 | 11.9 | 12 | 12.9 | 12.8 | 13.9 | 12.5 | 12.1 |

It can be seen from Table 2 that the tubular sponges obtained under the conditions of Examples 8 to 14 exhibited excellent retention of shape and were excellent also in long-term rubber elasticity. Further, also in the evaluation of the extruded design surface profile, good results were obtained. Contrary to them, the tubular sponges obtained under the conditions of Comparative Examples 6 to 10 had low retention of shape and were inferior to the tubular sponges of the examples in long-term rubber elasticity. Further, in spite that the retention of shape was low, that is, the long-chain branches are few, the extruded design surface profile was not good.

INDUSTRIAL APPLICABILITY

Since the rubber molded product of the invention is excellent in compression set, surface appearance, strength properties, heat aging resistance and weathering resistance, it can be favorably used for various weatherstrips used for automobile parts and heat insulating sponges for joint fillers and building materials.

## Claims

**1.** A copolymer rubber comprising structural units derived from

[A] ethylene,
[B] an $\alpha$-olefin of 3 to 20 carbon atoms,
[C] 5-ethylidene-2-norbornene (ENB),
[D] 5-vinyl-2-norbornene (VNB),

said copolymer rubber satisfying the following requirements (1) to (5):

(1) the molar ratio ([A]/[B]) of the structural units derived from ethylene [A] to the structural units derived from the $\alpha$-olefin [B] is in the range of 50/50 to 85/15,
(2) the total of molar quantities of the structural units derived from the non-conjugated polyene [C] and the structural units derived from the non-conjugated polyene [D] is in the range of 0.5 to 4.5% by mol in all the structural units,
(3) the intrinsic viscosity [$\eta$] as measured in decalin at 135°C is in the range of 1.0 to 5.0 dl/g,
(4) the molar ratio ([C]/[D]) of the structural units derived from the non-conjugated polyene [C] to the structural units derived from the non-conjugated polyene [D] is in the range of 90/10 to 99/1, and
(5) the copolymer rubber satisfies the following formula (I) :

$$\mathrm{Log}\{\eta^*(0.01)\}/\mathrm{Log}\{\eta^*(10)\} > 0.0753 \times \{\text{apparent iodine value derived from the non-conjugated polyene [D]}\} + 1.42 \qquad (I)$$

wherein $\eta^*(0.01)$ is a viscosity (Pa·sec) at 190°C and 0.01 rad/sec, and $\eta\cdot(10)$ is a viscosity (Pa·sec) at 190°C and 10 rad/sec and wherein $\eta^*(0.01)$, $\eta^*(10)$ and the apparent iodine value are determined as described in the experimental section.

**2.** The copolymer rubber as claimed in claim 1, which is synthesized by the use of a metallocene catalyst having a structure represented by the following formula (vi):

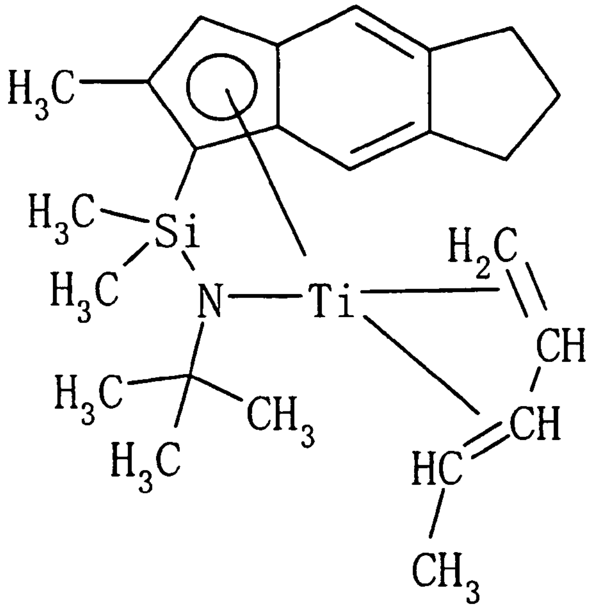

(vi)

**3.** A process for preparing a copolymer rubber, which prepares the copolymer rubber of claim 1 or 2 by the use of a metallocene catalyst having a structure represented by the aforesaid formula (vi).

**4.** The process for preparing a copolymer rubber as claimed in claim 3, having a step for obtaining a polymerization reaction solution in which the concentration of a copolymer rubber obtained by copolymerizing ethylene [A], the α-olefin [B], the non-conjugated polyene [C] and the non-conjugated polyene [D] using an aliphatic hydrocarbon as a polymerization solvent in the presence of a metallocene catalyst having a structure represented by the aforesaid formula (vi), in the polymerization solvent is in the range of 8 to 12% by weight.

**5.** A rubber composition containing the copolymer rubber of claim 1 or 2.

**6.** A crosslinked rubber obtained by crossliking the rubber composition of claim 5.

**7.** A sponge material for weatherstrip, comprising the crosslinked rubber of claim 6.

**8.** A material according to claim 7, which is a sponge for door.

**9.** A material according to claim 7, which is a sponge for opening trim.

**10.** A material according to claim 7, which is a sponge for hood seal.

**11.** A material according to claim 7, which is a sponge for trunk seal .

**12.** A highly foamed sponge material comprising the crosslinked rubber of claim 6.

**13.** A material according to claim 12, which is a heat-insulating sponge.

**14.** A material according to claim 12, which is a dam rubber.

**Patentansprüche**

**1.** Ein Copolymer-Kautschuk, umfassend die Struktureinheiten, abgeleitet von

[A] Ethylen,
[B] ein a-Olefin mit 3 bis 20 Kohlenstoffatomen,
[C] 5-Ethyliden-2-norbornen (ENB),
[D] 5-Vinyl-2-norbornen (VNB),

wobei der Copolymer-Kautschuk die folgenden Bedingungen (1) bis (5) erfüllt:

(1) das molare Verhältnis ([A]/[B]) der Struktureinheiten, die sich von Ethylen [A] ableiten, zu den Struktureinheiten, die sich von dem α-Olefin [B] ableiten, ist im Bereich von 50/50 bis 85/15,
(2) die gesamten molaren Mengen der Struktureinheiten, die sich von dem nicht-konjugierten Polyen [C] ableiten, und den Struktureinheiten, die sich von dem nicht-konjugierten Polyen [D] ableiten ist im Bereich von 0,5 bis 4,5 mol% bezogen auf alle Struktureinheiten,
(3) die intrinsische Viskosität (η), gemessen in Decalin bei 135°C, ist im Bereich von 1,0 bis 5,0 dl/g,
(4) das molare Verhältnis ([C]/[D]) der Struktureinheiten, die sich von dem nicht-konjugierten Polyen [C] ableiten, zu den Struktureinheiten, die sich von dem nicht-konjugierten Polyen [D] ableiten, ist im Bereich von 90/10 bis 99/1 und
(5) der Copolymer-Kautschuk erfüllt die folgende Formel (I):

$$\mathrm{Log}\{\eta^*(0.01)\}/\mathrm{Log}\{\eta^*(10)\} > 0.0753 \times \{\text{anscheinender Jod-Wert, abgeleitet von dem nicht-konjugierten Polyen [D]}\} + 1{,}42,$$

wobei η* (0,01) die Viskosität (Pa·sec) bei 190°C und 0,01 rad/sec ist, und η* (10) die Viskosität (Pa·sec) bei 190°C und 10 rad/sec ist, und worin η* (0,01), η* (10) und der anscheinende Jod-Wert wie im Experimentalteil beschrieben bestimmt werden.

**2.** Der Copolymer-Kautschuk wie beansprucht in Anspruch 1, welcher unter Verwendung eines Metallocen-Katalysators synthetisiert wird, der eine Struktur besitzt, die durch die folgende Formel (vi) dargestellt wird:

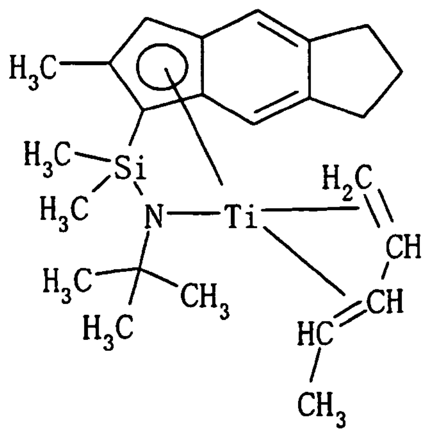

(iv)

**3.** Ein Verfahren für die Herstellung eines Copolymer-Kautschuks, welches den Copolymer-Kautschuk gemäß Anspruch 1 oder 2 unter Verwendung eines Metallocen-Katalysators mit einer Struktur herstellt, die durch die oben erwähnte Struktur (vi) dargestellt wird.

**4.** Ein Verfahren für die Herstellung eines Copolymer-Kautschuks wie beansprucht in Anspruch 3, welches einen Schritt enthält, um eine Polymerisationsreaktionslösung zu erhalten, in welcher die Konzentration eines Copolymer-Kautschuks, der durch Copolymerisation von Ethylen [A], dem α-Olefin [B], dem nicht-konjugierten Polyen [C] und

dem nicht-konjugierten Polyen [D] unter Verwendung eines aliphatischen Kohlenwasserstoffs als Polymerisationslösungsmittels in der Gegenwart eines Metallocen-Katalysators mit einer Struktur, die durch die zuvor beschriebene Formel (vi) dargestellt wird, erhalten wird, in dem Polymerisationslösungsmittel in dem Bereich von 8 bis 12 Gew.% ist.

**5.** Eine Kautschuk-Zusammensetzung, die den Copolymer-Kautschuk gemäß Anspruch 1 oder 2 enthält.

**6.** Ein vernetzter Kautschuk, der durch Vernetzen der Kautschuk-Zusammensetzung von Anspruch 5 erhalten wird.

**7.** Ein Schwammmaterial für ein Dichtungsgummi, das den vernetzten Kautschuk gemäß Anspruch 6 umfasst.

**8.** Material gemäß Anspruch 7, welches ein Schwamm für einen Türschwamm ist.

**9.** Material gemäß Anspruch 7, welches ein Schwamm für einen Öffnungsstreifen (opening trim) ist.

**10.** Material gemäß Anspruch 7, welches ein Schwamm für eine Kühlerhaubendichtung ist.

**11.** Material gemäß Anspruch 7, welches ein Schwamm für eine Kofferraumdichtung ist.

**12.** Ein stark geschäumtes Schwammmaterial, umfassend den vernetzten Kautschuk gemäß Anspruch 6.

**13.** Material gemäß Anspruch 12, welches ein Wärmedämmschwamm ist.

**14.** Material gemäß Anspruch 12, welches ein Kofferdamm (dam rubber) ist.

**Revendications**

**1.** Caoutchouc de copolymère comprenant des unités structurelles dérivées de

[A] éthylène,
[B] une $\alpha$-oléfine de 3 à 20 atomes de carbone,
[C] 5-éthylidène-2-norbornène (ENB),
[D] 5-vinyl-2-norbornène (VNB),

ledit caoutchouc de copolymère satisfaisant aux exigences suivantes (1) à (5) :

(1) le rapport molaire ([A] / [B]) des unités structurelles dérivées de l'éthylène [A] sur les unités structurelles dérivées de l'$\alpha$-oléfine [B] est dans la plage de 50/50 à 85/15,
(2) le total des quantités molaires des unités structurelles dérivées du polyène non conjugué [C] et des unités structurelles dérivées du polyène non conjugué [D] est dans la plage de 0,5 à 4,5 % en mole dans toutes les unités structurelles,
(3) la viscosité intrinsèque [$\eta$] telle que mesurée dans de la décaline à 135 °C est dans la plage de 1,0 à 5,0 dl/g,
(4) le rapport molaire ([C] / [D]) des unités structurelles dérivées du polyène non conjugué [C] sur les unités structurelles dérivées du polyène non conjugué [D] est dans la plage de 90/10 à 99/1, et
(5) le caoutchouc de copolymère satisfait à la formule suivante (I) :

$$\mathrm{Log}\{\eta^*(0{,}01)\} / \mathrm{Log}\{\eta^*(10)\} > 0{,}0753 \times \{\text{indice d'iode apparent dérivé du polyène non conjugué [D]}\} + 1{,}42 \qquad \text{(I)}$$

dans laquelle $\eta^*(0{,}01)$ est une viscosité (Pa·s) à 190 °C et 0,01 rad/s et $\eta^*(10)$ est une viscosité (Pa·s) à 190 °C et 10 rad/s, et dans laquelle $\eta^*(0{,}01)$, $\eta^*(10)$ et l'indice d'iode apparent sont déterminés tels que décrits dans la section expérimentale.

**2.** Caoutchouc de copolymère selon la revendication 1, qui est synthétisé par l'utilisation d'un catalyseur de métallocène

ayant une structure représentée par la formule suivante (vi) :

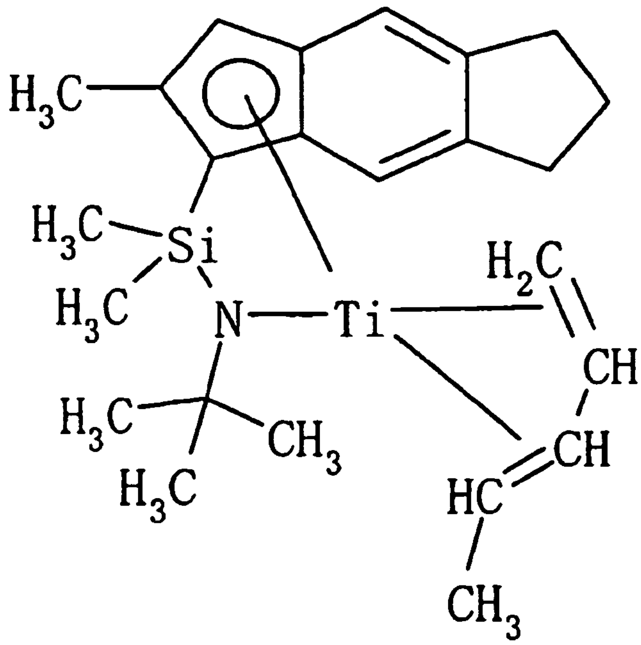

(vi)

**3.** Processus pour préparer un caoutchouc de copolymère, qui prépare le caoutchouc de copolymère de la revendication 1 ou 2 par l'utilisation d'un catalyseur de métallocène ayant une structure représentée par la formule susmentionnée (vi).

**4.** Processus pour préparer un caoutchouc de copolymère selon la revendication 3, ayant une étape pour obtenir une solution de réaction de polymérisation dans laquelle la concentration d'un caoutchouc de copolymère obtenu en copolymérisant de l'éthylène [A], l'α-oléfine [B], le polyène non conjugué [C] et le polyène non conjugué [D] en utilisant un hydrocarbure aliphatique en tant que solvant de polymérisation en présence d'un catalyseur de métallocène ayant une structure représentée par la formule susmentionnée (vi), dans le solvant de polymérisation est dans la plage de 8 à 12 % en poids.

**5.** Composition de caoutchouc contenant le caoutchouc de copolymère de la revendication 1 ou 2.

**6.** Caoutchouc réticulé obtenu en réticulant la composition de caoutchouc de la revendication 5.

**7.** Matière spongieuse pour bourrelet d'étanchéité, comprenant le caoutchouc réticulé de la revendication 6.

**8.** Matière selon la revendication 7, qui est une matière spongieuse pour joint de porte.

**9.** Matière selon la revendication 7, qui est une matière spongieuse pour joint d'ouverture.

**10.** Matière selon la revendication 7, qui est une matière spongieuse pour joint de capot.

**11.** Matière selon la revendication 7, qui est une matière spongieuse pour joint de coffre.

**12.** Matière spongieuse hautement alvéolaire comprenant le caoutchouc réticulé de la revendication 6.

**13.** Matière selon la revendication 12, qui est une matière spongieuse isolant de la chaleur.

**14.** Matière selon la revendication 12, qui est un caoutchouc de barrage.

[Fig.1]

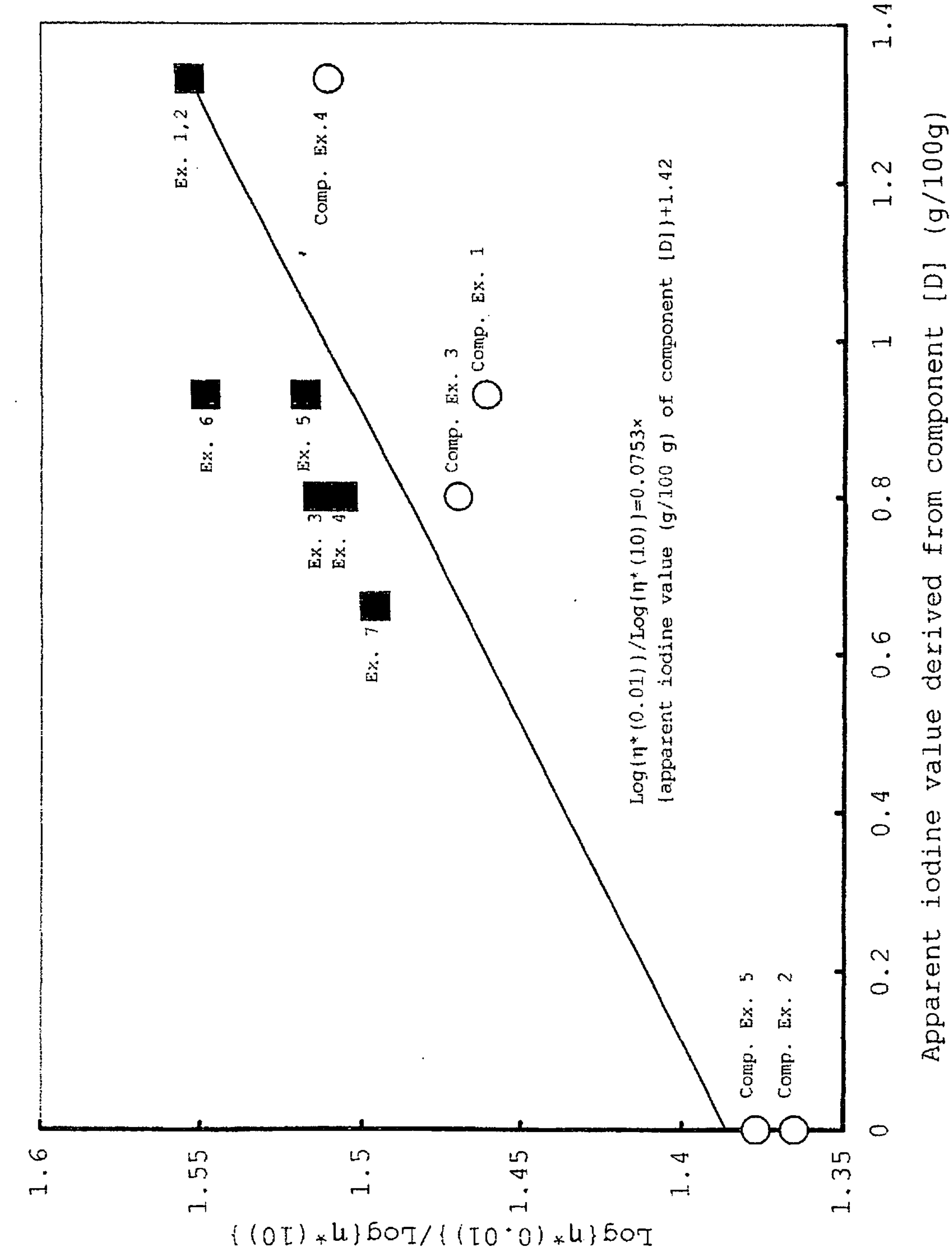
Log{η*(0.01)}/Log{η*(10)}
1.6
1.55
1.5
1.45
1.4
1.35
0
0.2
0.4
0.6
0.8
1
1.2
1.4
Apparent iodine value derived from component [D] (g/100g)
Ex. 1,2
Ex. 6
Ex. 5
Ex. 3
Ex. 4
Ex. 7
Comp. Ex. 4
Comp. Ex. 1
Comp. Ex. 3
Comp. Ex. 5
Comp. Ex. 2
Log{η*(0.01)}/Log{η*(10)}=0.0753×
(apparent iodine value (g/100 g) of component [D])+1.42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0751156 A
- WO 0059962 A
- WO 9849212 A
- US SN8241523 A

### Non-patent literature cited in the description


- **C.J. Carman ; R.A. Harrington ; C.E. Wilkes.** *Macromolecules,* 1977, vol. 10, 536-544
- **Masahiro Kakugo ; Yukio Naito ; Kooji Mizunuma ; Tatsuya Miyatake.** *Macromolecules,* 1982, vol. 15, 1150-1152
- **G. Van der Velden.** *Macromolecules,* 1983, vol. 16, 85-89
- **Harri. Lasarov ; Tuula T. Pakkanen.** *Macromol. Rapid Commun.,* 1999, vol. 20, 356-360
- **Harri Lasarov ; Tuula T. Pakkanen.** *Macrumol. Rapid Commun.,* 2001, vol. 22, 434-438